# EUROPÄISCHE PATENTSCHRIFT

(11) **EP 4 001 507 B1**
(45) Veröffentlichungstag und Bekanntmachung des Hinweises auf die Patenterteilung: **27.09.2023**
(21) Anmeldenummer: 21208964.3
(22) Anmeldetag: 18.11.2021
(51) Int. Cl.: E01C 23/088, E01C 23/12, E01C 19/48, G05D 1/02, B65G 41/00, B65G 67/22

(54) **VERFAHREN ZUR STEUERUNG DES BETRIEBS EINES AN EINER SELBSTFAHRENDEN STRASSENBAU- ODER TAGEBAUMASCHINE ANGEORDNETEN VERLADEFÖRDERBANDES FÜR SCHÜTTGUT RELATIV ZU EINER TRANSPORTMULDE EINES TRANSPORTFAHRZEUGS SOWIE STRASSENBAU- ODER TAGEBAUMASCHINE ZUR DURCHFÜHRUNG DES VERFAHRENS**
METHOD FOR CONTROLLING THE OPERATION OF A LOADING CONVEYOR BELT FOR BULK MATERIAL ARRANGED ON A SELF-PROPELLED ROAD CONSTRUCTION OR SURFACE MINING MACHINE RELATIVE TO A TRANSPORT TROUGH OF A TRANSPORT VEHICLE, AS WELL AS A ROAD CONSTRUCTION OR SURFACE MINING MACHINE FOR CARRYING OUT THE METHOD
PROCÉDÉ DE COMMANDE DU FONCTIONNEMENT D'UNE BANDE TRANSPORTEUSE DE CHARGEMENT POUR MARCHANDISES EN VRAC DISPOSÉE SUR UNE MACHINE AUTONOME DE CONSTRUCTION DE ROUTE OU D'EXPLOITATION MINIÈRE DE SURFACE PAR RAPPORT À UN BENNE D'UN VÉHICULE DE TRANSPORT, AINSI QUE MACHINE DE CONSTRUCTION DE ROUTE OU D'EXPLOITATION MINIÈRE DE SURFACE DESTINÉE À LA MISE EN OEUVRE DU PROCÉDÉ

(30) Priorität: 20.11.2020 DE 102020007112
(43) Veröffentlichungstag der Anmeldung: 25.05.2022
(73) Patentinhaber: BOMAG GmbH, 56154 Boppard (DE)
(72) Erfinder: Decker, Peter, 56154 Boppard (DE)
(74) Vertreter: Tomerius, Isabel

(56) Entgegenhaltungen:
- EP-B1- 2 301 318
- DE-A1-102011 114 183

## Beschreibung

Die Erfindung betrifft ein Verfahren zur Steuerung des Betriebs eines an einer selbstfahrenden Straßenbau- oder Tagebaumaschine angeordneten Verladeförderbandes für Schüttgut relativ zu einer Transportmulde eines Transportfahrzeugs sowie eine Straßenbau- oder Tagebaumaschine zur Durchführung des Verfahrens.

Die Erfindung betrifft allgemein solche Straßenbau- oder Tagebaumaschinen (nachfolgend als Maschine bezeichnet), die selbstfahrend ausgebildet sind und im Arbeitsprozess über ein an der Maschine angeordnetes Verladeförderband Schüttgut in einen Aufnahmebehälter eines anderen Fahrzeugs überladen. Aus dem Stand der Technik sind hierzu beispielsweise Straßenbaumaschinen mit einer Fräsvorrichtung bekannt, die einen von einem Maschinenrahmen getragenen und quer zur Arbeitsrichtung angeordneten Fräsrotor aufweisen, mit dem im Fräsbetrieb Bodenuntergrundmaterial, beispielsweise reparaturbedürftige Straßenbeläge, in einer gewünschten Frästiefe abgetragen werden. Im Fräsbetrieb fahren derartige Straßenfräsen über den Boden, wobei der Fräsrotor in den Boden eintaucht und durch die am rotierenden Fräsrotor angeordneten Bearbeitungswerkzeuge Bodenmaterial abfräst. Im Fräsbetrieb bewegt sich die Maschine somit in Arbeitsrichtung und überfährt dabei den zu bearbeitenden Boden. Eine solche Maschine ist beispielsweise aus der DE102011114183A1 bekannt. Typische Einsatzgebiete solcher Maschinen sind unter anderem der Straßen- und Wegebau. Ähnlich aufgebaute Maschinen mit Fräsvorrichtung finden auch beim Abbau von Bodenmaterial, beispielsweise im Tagebaubetrieb, Verwendung, häufig unter der Bezeichnung Surface-Miner. Eine solche Maschine ist beispielsweise in der DE102012008252A1 näher beschrieben. Das aufgefräste Bodenmaterial wird von der Maschine über ein an der Maschine angeordnetes Verladeförderband anschließend auf ein Transportfahrzeug, beispielsweise einen Lkw mit Transportmulde verladen. Des Weiteren ist es bekannt, beim Einbau von Asphaltmaterial sogenannte Beschicker zu verwenden. Solche Maschinen fahren einem Straßenfertiger im Einbaubetrieb voraus und nehmen Schüttgut in Form von Asphaltmaterial von anliefernden Lkws in ihren eigenen Bunker auf. Die Beschicker umfassen ein Förderband, über welches das im Bunker zwischengelagerte Asphaltmaterial auf den Straßenfertiger überladen wird, welcher das Asphaltmaterial anschließend einbaut. Ein solcher Beschicker ist beispielsweise in der DE102016006187A1 offenbart. Die vorstehend beschriebenen Straßenbau- oder Tagebaumaschinen bzw. Maschinen sind bevorzugt als selbstfahrende mit einem eigenen Antriebsmotor, üblicherweise ein Dieselmotor, ausgebildet.

Die Maschinen der vorstehend genannten Art zeichnen sich somit dadurch aus, dass an Ihnen ein Verladeförderband angeordnet ist, über das sie Schüttgut auf ein anderes Fahrzeug im laufenden Arbeitsprozess überladen. Im Fall von Beschickern übergibt der Beschicker über sein Verladeförderband bevorratetes Einbaugut in den Bunker eines nachfolgenden Straßenfertigers. Im Fall von Straßenfräsen und Surface-Minern überladen diese Fräsmaschinen aufgefrästes Fräsgut auf ein Transportfahrzeug, insbesondere in die Transportmulde eines Lkws. Diesem Überladeprozess kommt somit bei der Koordination der beiden Fahrzeuge zueinander eine wesentliche Bedeutung zu. Einerseits soll vermieden werden, dass das Schüttgut außerhalb des vorhandenen Vorratsbehälters (Bunker, Transportmulde etc.) landet, und andererseits soll der Arbeitsprozess durch den Überladevorgang möglichst wenig beeinflusst werden.

Aus diesem Grund sind daher bereits Systeme bekannt, die zumindest in einem begrenzten Umfang die automatische bzw. selbsttätige Steuerung wenigstens einer Verladefunktion des Verladeförderbandes in Abhängigkeit von über eine 3D-Kamera aufgenommenen Bilddaten ermöglicht. Dies ist beispielsweise in der DE 102011114183 A1 der Anmelderin beschrieben, die die Anordnung einer Sensorkamera, beispielsweise einer Stereovision-Kamera oder einer Sensorkamera mit einem PMD-Sensor, am Förderband einer Straßenfräse betrifft. Das von dieser Sensorkamera erfasste Bild des Transportbehälters wird genutzt, um Verladefunktionen, wie beispielsweise ein Stoppen des Beladungsvorgangs, ein Ändern der Umlaufgeschwindigkeit des Förderbandes und damit der Abwurfweite, ein Ändern des Seitenverstellwinkels oder ein Ändern des Neigungswinkel des Verladeförderbandes, zu steuern. Herausfordernd bei dem in der DE 102011114183 A1 offenbarten Verfahren ist die konkrete Ermittlung der Lkw-Pose, d.h. konkret der Position und Orientierung der Transportmulde des Transportfahrzeuges relativ zur Straßenbaumaschine aus den aufgenommenen Bilddaten.

Aus der EP 2301318 B1 ist ein Kontrollsystem für ein landwirtschaftliches Fahrzeug, insbesondere einen Feldhäcksler, zur Überladung von Futtermittel bekannt. Dieser umfasst ein Überladerohr mit einer endständigen Steuerklappe, mit deren Hilfe der Fördergutstrom in das im Erntebetrieb neben dem Feldhäcksler herfahrende Transportfahrzeug überladbar ist.

Ausgehend von der DE102011114183 A1 liegt die Aufgabe der Erfindung somit darin, dass dort offenbarte Verfahren dahingehend zu verbessern, dass eine verbesserte Ermittlung der Pose des das über das Verladeförderband abtransportierten Schüttgutes aufnehmenden Fahrzeugs relativ zu dem das Verladeförderband tragenden Fahrzeug möglich ist.

Die Lösung der Aufgabe gelingt mit einem Verfahren zur Steuerung des Betriebs eines an einer selbstfahrenden Straßenbau- oder Tagebaumaschine angeordneten Verladeförderbandes für Schüttgut relativ zu einer Transportmulde eines Transportfahrzeugs sowie einer Baumaschinen gemäß den unabhängigen Ansprüchen. Bevorzugte Weiterbildungen sind in den abhängigen Ansprüchen angegeben.

Das erfindungsgemäße Verfahren zur Steuerung des Betriebs eines an einer selbstfahrenden Straßenbau- oder Tagebaumaschine angeordneten Verladeförderbandes für Schüttgut relativ zu einer Transportmulde eines Transportfahrzeugs umfasst in einem ersten Schritt a) zunächst ein Ermitteln eines Abstandes einer am Verladeförderband angeordneten 3D-Kamera lotrecht zur Bodenoberfläche. Dies bedeutet, dass über einen nachstehend noch näher beschriebenen Verfahrensschritt der Abstand der 3D-Kamera und insbesondere des Objektivs der 3D-Kamera bzw. des Blickausgangspunktes der 3D-Kamera direkt oder indirekt zum Bodenuntergrund ermittelt wird. Steht die Maschine auf einer horizontalen Bodenoberfläche, kann dies insbesondere beispielsweise eine Messung in Vertikalrichtung oder aber auch in Schrägrichtung zum Bodenuntergrund umfassen, wie nachstehend ebenfalls noch näher angegeben. Es wird mit anderen Worten der Abstand der 3D-Kamera lotrecht zur im Idealfall planen Bodenoberfläche ermittelt. Durch die Ermittlung des lotrechten Abstandes der 3D-Kamera zum Bodenuntergrund ist es möglich, die von der 3D-Kamera aufgenommenen Bildinformationen ebenfalls insbesondere auch ins räumliche Verhältnis zum Bodenuntergrund zu setzen. Insbesondere gelingt dadurch beispielsweise auch die Bestimmung, wie weit sich ein von der 3D-Kamera aufgenommener Bildpunkt oberhalb der Bodenoberfläche, insbesondere in lotrechter Richtung, befindet. Die Bezeichnungen "horizontal" und "vertikal" beziehen sich dabei auf einen horizontalen Bodenuntergrund. Steht die Maschine an einer Steigung, neigt sich die Ebene des Bodenuntergrundes entsprechend. "Horizontal" ist dann im Sinne von "in einer Ebene parallel zum Bodenuntergrund" zu verstehen. "Vertikal" als "lotrecht zu dieser Ebene".

Für das erfindungsgemäße Verfahren ist es ferner in einem Schritt b) vorgesehen, dass ein Aufnehmen einer Vielzahl von Bildpunkten durch die 3D-Kamera erfolgt. Die 3D-Kamera ist dabei auf einen Verladebereich gerichtet. Der Verladebereich ist derjenige Bereich, in dem ein das vom Verladeförderband abgeworfene Schüttgut aufnehmendes Element, beispielsweise die Transportmulde eines Transportfahrzeugs oder der Bunker eines Straßenfertigers, positioniert sein muss, damit das Schüttgut innerhalb des Aufnahmeraums des das Schüttgut aufnehmenden Elementes landet. Der das Schüttgut aufnehmende Aufnahmeraum wird nachstehend allgemein als Transportmulde bezeichnet. Der Verladebereich gibt somit einen Positionsbereich der Transportmulde relativ zur Maschine an, in dem das zu beladene Fahrzeug mit seinem Schüttgut aufnehmenden Teil positioniert sein soll und muss, damit das vom Verladeförderband herabfallende Schüttgut innerhalb der Transportmulde landet. Bei einer Straßenfräse mit in Arbeitsrichtung nach vorn förderndem Verladeförderband ist dies beispielsweise insbesondere ein Bereich in Arbeitsrichtung vor der Straßenfräse. Bei einem Beschicker ist dies dagegen beispielsweise üblicherweise ein in Einbaurichtung hinter dem Beschicker liegender Bereich. Ausschlaggebend für die Lage des Verladebereiches ist neben der konkreten Ausbildung des das Schüttgut aufnehmenden Aufnahmeraums bzw. der Transportmulde insbesondere auch der Betriebszustand des Verladeförderbandes, speziell in Bezug auf dessen Umlaufgeschwindigkeit und dessen horizontaler und vertikaler Auslenkung. Dabei sollen der Abwurfpunkt des Verladeförderbandes und/oder der Auftreffpunkt des Schüttgutes in der Transportmulde und/oder die Abwurfkurve des vom Verladeförderband abgeworfenen Schüttgutes derart positioniert sein, dass das Schüttgut möglichst vollständig innerhalb des das Schüttgut aufnehmenden Aufnahmeraums landet. Dazu ist es erforderlich, dass die Transportmulde innerhalb des Verladebereiches positioniert wird. Die 3D-Kamera wird nun bevorzugt derart positioniert, dass sie einerseits wenigstens teilweise den Verladebereich abdeckt und andererseits darüber hinaus auch an den Verladebereich angrenzende Bereiche. Dies hat zur Folge, dass die 3D-Kamera unter Umständen nicht nur Bildpunkte aufnimmt, die direkt der Transportmulde zuzuordnen sind, sondern auch Bildpunkte von daran angrenzenden Bereichen. Insgesamt wird mithilfe der 3D-Kamera somit insbesondere eine 3D-Punktwolke von wenigstens einem Teilbereich des Verladebereiches und damit der Transportmulde erhalten, wenn sich diese innerhalb des Verladebereiches befindet. Aufgrund der Nutzung einer 3D-Kamera ist jeder Bildpunkt mit einer Entfernungsinformation zur 3D-Kamera verknüpft. Damit steht für das erfindungsgemäße Verfahren ergänzend zu jedem Bild die Information zu dessen Relativlage relativ zur 3D-Kamera zur Verfügung.

Hiervon ausgehend erfolgt nun im Schritt c) ein Ermitteln der Lage der Transportmulde aus der Punkteverteilung der Vielzahl der Bildpunkte. Dabei muss nicht zwingend die gesamte Transportmulde von der 3D-Kamera erfasst werden. Es kann auch die Erfassung wenigstens eines Teils der Transportmulde, insbesondere eines Teils einer Seitenwand der Transportmulde, ausreichen. Wesentlich ist, dass wenigstens so viel von der Transportmulde erfasst wird, dass einerseits der Innenraum der Transportmulde und andererseits der Außenraum der Transportmulde voneinander unterschieden werden können, um einen zuverlässigen Überladevorgang zu ermöglichen. Insbesondere kann es dabei ausreichend sein, wenn wenigstens Teile einer oder mehrerer Seitenwände der Transportmulde erfasst werden. Horizontale bzw. parallel zum Bodenuntergrund verlaufende Flächen weisen dabei eine Vielzahl von nebeneinander liegenden Bildpunkten auf und vertikale bzw. senkrecht zum Bodenuntergrund verlaufende Flächen weisen eine Vielzahl von übereinander liegenden Bildpunkten auf. Letztere werden beispielsweise regelmäßig von den Seitenwänden der Transportmulde gebildet, wohingegen horizontale Flächen häufig vom Boden der Transportmulde gebildet werden.

Im Schritt d) erfolgt nun der Abgleich der ermittelten Position der Transportmulde relativ zur Maschine bzw. zum an der Maschine angeordneten Verladeförderband. Dazu erfolgt erfindungsgemäß ein Korrelieren der ermittelten Lage der Seitenwand der Transportmulde mit einer Lage eines Abwurfpunktes und/oder einer Abwurfbahn des vom Verladeförderband abgeworfenen Schüttgutes und/oder einem Auftreffpunkt des Schüttgutes. Der aktuelle Abwurfpunkt und/oder die Abwurfbahn und/oder der Auftreffpunkt können dabei aktiv ermittelt werden, beispielsweise ebenfalls mithilfe einer oder der 3D-Kamera, oder aber über eine geeignete Rechen- und/oder Speicherfunktion berechnet werden, insbesondere wenn die Stellungs- und Betriebsparameter des Verladeförderbandes ermittelt und/oder bekannt sind. Dies kann auch kennfeldbasiert erfolgen. Der Abwurfpunkt ist dabei derjenige Punkt, an dem das Schüttgut vom Verladeförderband abgeworfen wird. Die Abwurfbahn ist die Flugbahn, die das Schüttgut vom Abwurfpunkt bis zum Auftreffen in der Transportmulde einnimmt. Der Auftreffpunkt des Schüttgutes ist real der Endpunkt der Abwurfbahn und bezeichnet somit denjenigen Punkt/Bereich innerhalb der Transportmulde, auf/in dem von dem Verladeförderband herabfallendes Schüttgut landet. Für eine auf Berechnungen gestützte Ermittlung des Auftreffpunktes hat es sich allerdings beispielsweise als vorteilhaft erwiesen, wenn der Auftreffpunkt als Schnittpunkt des Abwurfbahn des Schüttes mit der Ebene, in der die Oberkanten der Seitenwände der Transportmulde liegen, definiert wird. Typische Stellungsparameter des Verladeförderbandes sind dabei die vertikale Neigung der Verladeförderbandes (d.h. Position um eine horizontale Schwenkachse) und/oder die horizontale Verschwenkposition (d.h. Position um eine vertikale Schwenkachse). Typische Betriebsparameter des Verladeförderbandes sind beispielsweise die Umlaufgeschwindigkeit des Verladeförderbandes und/oder dessen Beladungszustand. Ziel des Abgleichens im Schritt d) ist, dass der Abwurfpunkt und/oder die Abwurfbahn und/oder der Auftreffpunkt des das Verladeförderband verlassenden Schüttguts innerhalb der vorhergehend mithilfe der 3D-Kamera ermittelten Transportmulde liegt, um einen möglichst vollständigen Überladeprozess zu ermöglichen. Um die Bildverarbeitung an dieser Stelle zu vereinfachen, können ferner bestimmte aufgenommene Bildpunkte gezielt ausgeblendet werden, beispielsweise solche Bildpunkt, die unterhalb und/oder oberhalb eines festgelegten Abstandes zum Bodenuntergrund liegen und/oder die außerhalb eines festgelegten Horizontalabstandes bzw. eines festgelegten Abstandes parallel zum Bodenuntergrund liegen. Auf diese Weise können für die Ermittlung der Position der Transportmulde und für die Ermittlung des Abwurfpunktes und/oder der Abwurfbahn und/oder des Auftreffpunktes offensichtlich irrelevante Bildpunkte vernachlässigt werden, was den zu bearbeitenden Berechnungsumfang weiter senkt.

Teil des erfindungsgemäßen Verfahrens ist schließlich im Schritt e) ein Steuern einer Verladefunktion in Abhängigkeit vom Ergebnis der Korrelation der Lage der Seitenwand der Transportmulde mit einer Lage eines Abwurfpunktes und/oder einer Abwurfbahn des vom Verladeförderband abgeworfenen Schüttgutes. Das erfindungsgemäße Verfahren sieht somit die Ausgabe von Steuerparametern für eine Verladefunktion vor, die vom Ergebnis eines Abgleichs der Lage der Transportmulde bzw. eines Teiles davon mit der Lage und/oder dem Verlauf des Abwurfpunktes und/oder der Abwurfbahn abhängen. Damit ist es möglich, insbesondere dann, wenn das Ergebnis der Korrelation dahingehend ausfällt, dass das Schüttgut nicht in die Transportmulde hinein vom Verladeförderband abgeladen wird, geeignete Korrekturmaßnahmen vorgenommen werden, wie beispielsweise eine Änderung der Relativlage des Verladeförderbandes relativ zur Maschine, einem Verladestopp etc. Damit gelingt zumindest innerhalb eines festgelegten Bereiches eine idealerweise vollautomatische Korrektur der Positionierung des Verladeförderbandes an der Maschine, wenn die Transportmulde und die Maschine ihre Relativposition zueinander ändern bzw. noch keine optimale Relativausrichtung zueinander für einen vollständigen Überladeprozess aufweisen. Dies kann zu einer erheblichen Entlastung des Bedieners der Maschine im Arbeitsprozess der Maschine beitragen. Die Verarbeitung und Auswertung der Bilddaten erfolgt dabei mit der Steuereinheit, die in Abhängigkeit vom Auswertungsergebnis geeignete Steuerbefehle zur Steuerung wenigstens einer Verladefunktion ausgibt, beispielsweise zur Ansteuerung eines Aktors, mit dem die Relativlage des Verladeförderbandes an der Maschine verändert werden kann.

Für den Schritt a) bestehen zur Durchführung des erfindungsgemäßen Verfahrens alternative Vorgehensweisen. Einerseits ist es möglich, dass das Ermitteln des lotrechten Abstandes durch ein direktes Messen zum Boden hin erfolgt, insbesondere mithilfe eines Abstandssensors. Dazu ist es vorgesehen, dass ein geeigneter Abstandssensor, beispielsweise ein geeigneter Ultraschall- oder Lasersensor, LIDAR oder Radarsensor etc., an der 3D-Kamera oder an einer ortsfest zur 3D-Kamera gelegenen Position des Verladeförderbandes angeordnet wird, sodass mithilfe dieses Abstandssensors der gewünschte lotrechte Abstand ermittelt werden kann. Hierzu kann es vorgesehen sein, dass Korrekturgrößen mit berücksichtigt werden, beispielsweise die aktuelle Neigungsposition des Verladeförderbandes etc. D.h., zur konkreten Ermittlung des lotrechten Abstandes muss die Messung nicht zwingend auch in lotrechter Richtung zum Bodenuntergrund erfolgen. Ergänzend oder alternativ kann das Ermitteln des lotrechten Abstandes auch durch ein indirektes Ermitteln über eine Positionsbestimmung wenigstens eines Verstellaktors, mit dem das Verladeförderband relativ zu einem Maschinenrahmen verstellbar ist, und/oder wenigstens eines Verstellaktors, mit dem der Maschinenrahmen relativ zum Bodenuntergrund verstellbar ist, erfolgen. Ausgangspunkt hier ist, dass der lotrechte Abstand der 3D-Kamera bei einer bekannten Position des Verladeförderbandes und damit einer bekannten verstellte Positionen des oder der jeweiligen verstellte Aktoren bekannt ist. Aus einer Ermittlung der Verstellbewegung des oder der jeweiligen Verstellaktors/-ren in Bezug auf diese bekannte Ausgangslage kann dann unter rein geometrischen Erwägungen der aktuelle lotrechte Abstand der 3D-Kamera zum Bodenuntergrund berechnet werden.

Häufig ist beispielsweise der Maschinenrahmen der Maschine gegenüber dem Bodenuntergrund höhenverstellbar. Dies kann beispielsweise dazu dienen, die Frästiefe einer Fräseinrichtung der Maschine variieren zu können, schwankende Bewegungen des Maschinenrahmens beim Überfahren von Bodenhindernissen auszugleichen oder diesen zumindest entgegenzuwirken etc. Diese Höhenverstellung wird häufig dadurch erreicht, dass der Maschinenrahmen über höhenverstellbare Hubsäulen mit auf dem Bodenuntergrund laufenden Fahreinrichtungen, wie beispielsweise Rädern oder Kettenlaufwerken, verbunden ist. Wesentlich ist nun, dass mit einer Höhenverstellung dieser Hubsäulen auch der lotrechte Abstand der 3D-Kamera zum Boden variiert. Bei der vorstehend beschriebenen indirekten Ermittlungsmethode im Schritt "Ermitteln des lotrechten Abstandes der 3D-Kamera zum Bodenuntergrund durch ein indirektes Ermitteln" ist es nun bevorzugt, wenn hierzu Wegmesswerte von Wegmesssensoren berücksichtigt werden, über die die Verstellposition von wenigstens einer und insbesondere aller Hubsäulen ermittelt wird, über die der Maschinenrahmen der Maschine höhenverstellbar gegenüber wenigstens einer Fahreinrichtung ist, und/oder die Verstellposition von Linearaktoren ermittelt wird, über die die 3D-Kamera gegenüber einem Förderband und/oder das Förderband gegenüber einem Maschinenrahmen um eine vertikale und/oder horizontale Schwenkachse verstellbar ist und/oder die Verstellposition von Linearaktoren ermittelt wird, über die die Höhenposition von wenigstens einem Seitenschild eines Fräswalzenkastens verstellbar ist. Bei diesen Linearaktoren handelt es sich häufig insbesondere um Hydraulikzylinder. Dabei ist es möglich, zur Wegmessung an den zueinander verstellbaren Elementen des Hydraulikzylinders einen geeigneten Sensor anzulenken, beispielsweise einen Seilzugsensor. Besonders bevorzugt ist es jedoch, auf in dem Innenraum des Hydraulikzylinders angeordnete Wegmesssensoren zurückzugreifen, beispielsweise magnetostriktive Sensoren. Die grundsätzliche Anordnung von Hubsäulen insbesondere an Straßenfräsen ist im Stand der Technik bekannt und beispielsweise in der DE102013010298A1 beschrieben. Dabei ist es möglich, dass nur einzelne Fahreinrichtungen der Maschine gegenüber dem Maschinenrahmen höhenverstellbar sind oder alle der vorhandenen Fahreinrichtungen. Ergänzend oder alternativ ist es möglich, auch die 3D Kamera in ihrer Relativlage zum Verladeförderband verstellbar auszugestalten, um beispielsweise bei verschiedenen Neigungspositionen des Verladeförderbandes eine optimale Ausrichtung der 3D Kamera zum Verladebereich hin zu ermöglichen bzw. die Lage und Orientierung des Aufnahmebereichs der 3D-Kamera an die jeweiligen Arbeitsbedingungen, beispielsweise die Form und/oder Höhe der Transportmulde, anzupassen. Ergänzend oder alternativ können Aktoren, insbesondere Linearaktoren, verwendet werden, um das Förderband gegenüber dem Maschinenrahmen um eine vertikale und/oder horizontale Schwenkachse zu verstellen, wie beispielsweise in der DE102011111867A1 offenbart. Ferner ist es bekannt, Seitenschilde bei solchen Maschinen zu verwenden. Solche Seitenschilde werden häufig als Seitenschutz an sogenannten Fräswalzenkästen von beispielsweise Straßenfräsen oder Surface-Minern verwendet. Dies ist unter anderem in der DE102011114710A1 beschrieben. Über eine Erfassung der Verstellposition eines oder mehrere Aktoren, insbesondere Linearaktoren, eines Seitenschildes kann somit ebenfalls eine Positionsinformation des Maschinenrahmens und damit des Verladeförderbandes mit der 3D-Kamera relativ zum Bodenuntergrund gewonnen werden. Es versteht sich, dass die vorstehend ermittelten Wegmesswerte an die Steuereinheit übermittelt werden und in geeigneter Weise über Berechnungen zur Ermittlung der Position letztlich der 3D-Kamera im Raum und insbesondere in Relation zum Bodenuntergrund herangezogen werden. Je nach Anzahl und Positionierung der jeweiligen Wegmesssensoren kann dies ausschließlich auf Grundlage dieser Messdaten oder aber ergänzend mit weiteren Informationsquellen, wie beispielsweise dem vorstehend bereits beschriebenen Abstandssensor, erfolgen. Besonders bevorzugt ist es somit, wenn im Schritt "Ermitteln des Abstandes durch indirektes Ermitteln" ein Ausgangswert mit bekanntem Abstand der 3D-Kamera zum Boden und bekannten Verstellpositionen der Hubsäulen und/oder Linearaktoren berücksichtigt wird.

Es kann wichtig sein, die Position der 3D-Kamera bzw. letztlich die Lage und Orientierung ihres Aufnahmebereiches zu ermitteln, insbesondere wenn die 3D-Kamera relativ zum Verladeförderband verstellbar ist und/oder besonders genaue Bestimmungen gewünscht und erforderlich sind. Es kann dazu vorgesehen sein, dass eine direkte Lagebestimmung der 3D-Kamera zur Ermittlung von deren Blickwinkel erfolgt, insbesondere mithilfe wenigstens eines Beschleunigungssensors. Mit einem Beschleunigungssensor kann beispielsweise die Ausrichtung der 3D-Kamera relativ zur Erdanziehungskraft ermittelt werden. Insbesondere, wenn die Maschine auf einer Ebene aufsteht, die nicht orthogonal zur Gravitationskraft verläuft, ist es möglich, einen weiteren Beschleunigungssensor an dem Maschinenrahmen und/oder den Fahreinrichtungen, insbesondere einem Kettenlaufwerk oder einem Rad, anzuordnen. Dann ist es möglich, mithilfe der beiden Messwerte der Beschleunigungssensoren an der 3D-Kamera/dem Verladeförderband und dem Maschinenrahmen/der Fahreinrichtung aus dem Messverhältnis dieser beiden Beschleunigungssensoren die Orientierung letztlich der 3D-Kamera zum Bodenuntergrund zu bestimmen. Ergänzend oder alternativ ist es aber auch möglich, eine indirekte Lagebestimmung der 3D-Kamera zur Ermittlung von deren Blickwinkel durch eine Positionsbestimmung wenigstens eines Verstellaktors, mit dem das Verladeförderband relativ zu einem Maschinenrahmen verstellbar ist, und/oder wenigstens eines Verstellaktors, mit dem der Maschinenrahmen relativ zum Bodenuntergrund verstellbar ist, und/oder wenigstens eines Verstellaktors, mit dem die Position eines Seitenschildes eines Fräswalzenkasten einstellbar ist, durchzuführen. Weiter ergänzend ist es möglich, einen weiteren Beschleunigungssensor beispielsweise an einer der Fahreinrichtungen, insbesondere einem Kettenlaufwerk oder einem Radlaufwerk, vorzusehen. Die Rotation zwischen dem Beschleunigungssensor an dem und dem Beschleunigungssensor an der Kamera entsprechend der Orientierung der Kamera zum Boden.

Vom Schritt b) zum Schritt c) erfolgt erfindungsgemäß auf Grundlage der auf die vorstehend genannte Art und Weise gewonnenen räumlichen Bilddaten der in einem Blickfeld der 3D-Kamera liegenden Transportmulde oder zumindest Teilen davon in einem Zwischenschritt ein Projizieren der Vielzahl von Bildpunkten, insbesondere der 3D-Punktwolke, in eine im Wesentlichen horizontale (bzw. parallel zur Bodenoberfläche verlaufenden) 2D-Referenzebene. Damit wird der Blickwinkel auf die von der 3D-Kamera aufgenommenen 3D-Bildpunkte auf eine virtuelle zweidimensionale Referenzebene hin vereinheitlicht. Entsprechend liegen lotrecht zu dieser Referenzebene übereinander aufgenommene Bildpunkte in der Referenzebene aufeinander. Dieser Verfahrensschritt kann konkret durch eine geeignete Bildverarbeitungssoftware erfolgen. Die Festlegung der Position dieser virtuellen 2D-Referenzebene erfolgt dabei unter Berücksichtigung des im Schritt a) ermittelten Abstandes. Damit kann einerseits die Höhe der 2D-Referenzebene gegenüber dem Bodenuntergrund ermittelt werden und zudem kann jedem Bildpunkt ein Abstandswert zum Bodenuntergrund und/oder zur 2D-Referenzebene zugewiesen werden. Damit können beispielsweise für die weitere Verarbeitung der verfügbaren Bilddaten gezielt solche Bildpunkt ausgeblendet werden die unterhalb der Referenzebene liegen etc. Das für das erfindungsgemäße Steuerungsverfahren zu verarbeitende Datenvolumen kann auf dieser Weise erheblich reduziert werden. Durch das im Zwischenschritt erfolgte Projizieren der Vielzahl von Bildpunkten in die zweidimensionale Referenzebene wird in der zweidimensionalen Referenzebene eine Häufigkeitsverteilung der aufgenommenen Bildpunkte erhalten. Bereiche mit in der dreidimensionalen Ausgangsaufnahme enthaltenen übereinanderliegenden Bildpunkten weisen eine erhöhte Bildpunktdichte auf. Dies entspricht somit insbesondere Bereichen der Transportmulde, die senkrecht zur zweidimensionalen Referenzebene aufragen. Parallel zur zweidimensionalen Referenzebene verlaufende Oberflächen führen in der zweidimensionalen Projektion dagegen zu einer geringeren Dichte von Bildpunkten.

Erfindungsgemäß ist es für den Schritt c) entsprechend vorgesehen, dass zum Ermitteln der Lage der Transportmulde oder wenigstens eines Teils der Transportmulde auf die Punkteverteilung der Vielzahl von Bildpunkten in der 2D-Referenzebene zurückgegriffen wird. Dies ist möglich, da die aufragenden Seitenwände der Transportmulde in der 2-dimensionalen Referenzebene der vorstehend beschriebenen Bildprojektion durch eine erhöhte Bildpunktdichte hervortreten. Letztlich erfolgt in diesem Schritt somit über ein Ermitteln der Häufigkeitsverteilung indirekt die Detektion des Verlaufs der im Wesentlichen senkrecht zur zweidimensionalen Referenzebene aufragenden Seitenwände der Transportmulde oder zumindest Teilen davon.

Um den Bildpunktverarbeitungsschritt im Zwischenschritt und/oder zwischen den Schritten b) und c) noch weiter zu vereinfachen, kann es vorgesehen sein, dass ein Entfernen von Bodendatenpunkten aus der Vielzahl von Bildpunkten, insbesondere der 3D-Punktwolke, erfolgt, insbesondere durch Löschen oder Maskieren von Bodendatenpunkten (Bildpunkte des Bodenuntergrundes) und/oder durch Löschen oder Maskieren von Bildpunkten unterhalb einer festgelegten virtuellen horizontalen, zweidimensionalen Schwellenebene. Der Hintergrund dieses Ansatzes ist, dass die Transportmulde auf dem Bodenuntergrund aufsteht und somit einen lotrechten Abstand zu diesem aufweist. Die unterhalb der Transportmulde liegenden Bildpunkte sind für die Ermittlung der Relativlage der Transportmulde zum Abwurfpunkt des Verladeförderbandes weniger relevant. Auch die knapp oberhalb des Bodens der Transportmulde liegenden Bildpunkte können im Prinzip vernachlässigt werden, da es für eine zuverlässige Überladung des Schüttgutes streng genommen lediglich auf eine Kenntnis der Lage und des Verlaufs der Seitenwände und insbesondere hier auch nur des oberen Endes der Seitenwände der Transportmulde ankommt. Es ist daher möglich, eine horizontale Schwellenebene zu definieren, die beispielsweise auf Höhe des Bodens der Transportmulde oder knapp oberhalb der Höhe der Transportmulde aber nicht oberhalb des vertikalen Endes der Seitenwände liegt. Horizontal und vertikal sind in diesem Zusammenhang dabei so zu verstehen, dass sie sich auf eine Maschine beziehen, die auf einem horizontal verlaufenden Bodenuntergrund aufsteht. Steht die Maschine in einer Steigung, ist diese Ebene entsprechend geneigt und die vertikaler verläuft dann lotrecht zu dieser geneigte Ebene. Die Schwellenebene bezeichnet somit eine Ebene, die parallel zum Bodenuntergrund verläuft, unterhalb derer aufgenommene Bildpunkte ausgeblendet werden. Damit kann das zu verarbeitende Datenvolumen erheblich reduziert werden und zudem eine eindeutigere Ermittlung des Verlaufs insbesondere eines Teils einer Seitenwand der Transportmulde erfolgen, da die Anzahl potentiell störender Bildpunkte drastisch reduziert wird. Alternativ ist es auch möglich, die Schwellenebene knapp unterhalb des Bodens der Transportmulde anzuordnen. Auf diese Weise kann beispielsweise besonders gut der Innenraum der Transportmulde ergänzend zur Lage wenigstens eines Teils einer Seitenwand ermittelt werden, da der üblicherweise flache oder zumindest regelmäßig geformte Boden der Transportmulde aus der dort vorliegenden verhältnismäßig gleichmäßigen Bildpunktverteilung gut ermittelt werden kann. Dies gilt allerdings nur zu Beginn des Beladungsvorgangs bei leerer Transportmulde. Auch eine effiziente Überwachung des Beladungszustandes der Transportmulde ist hier möglich.

Ziel der Schritte a) und b) und, wenn vorhanden, des Zwischenschritts ist letztlich die im Schritt c) erfolgende möglichst exakte und zuverlässige Ermittlung der Lage der Transportmulde, insbesondere wenigstens eines Teils der Seitenwand der Transportmulde. Dazu kann es vorgesehen sein, dass konkret eine statistische Auswertung erfolgt und Bereiche mit einer erhöhten Häufung von Bildpunkten einer Seitenwand zugeordnet werden. Ergänzend oder alternativ können geradlinig verlaufende Verteilungsmaxima von Bildpunkten in der zweidimensionalen Referenzebene einer Seitenwand zugeordnet werden. Weiter ergänzend oder alternativ kann beispielsweise darauf abgestellt werden, dass in einem bestimmten Winkelbereich, insbesondere 90° +/- 10°, einander schneidende geradlinig verlaufende Verteilungsmaxima einer Ecke der Transportmulde zugeordnet werden. Auch hieraus kann beispielsweise die Lage des Innenraums der Transportmulde eindeutig abgeleitet und identifiziert werden, da dies der von diesem Winkelbereich eingeschlossene Bereich ist.

Wie vorstehend bereits angegeben, kann es vorgesehen sein, dass das Verladeförderband relativ zur übrigen Maschine verstellbar ist, insbesondere um eine horizontale Achse schwenkbar, um die Neigung des Förderbandes verstellen zu können, und/oder um eine vertikaler Achse schwenkbar, um die Seitenausrichtung bzw. horizontale Auslenkung des Verladeförderbandes variieren zu können. Ergänzend oder alternativ ist es auch möglich, die Umlaufgeschwindigkeit des Förderbandes zu variieren. Wird die Umlaufgeschwindigkeit erhöht, wird die Abwurfbahn in Abwurfrichtung in der horizontalen Ebene verlängert, wird die Umlaufgeschwindigkeit dagegen gesenkt, führt dies zu einer Verkürzung der Abwurfband in Arbeitsrichtung. Es ist daher besonders bevorzugt, wenn im Schritt d) wenigstens einer der Faktoren Umlaufgeschwindigkeit des Verladeförderbandes, horizontale Schwenklage des Verladeförderbandes und/oder vertikale Schwenklage des Verladeförderbandes in eine Ermittlung und/oder Festlegung eines Abwurfpunktes und/oder einer Abwurfbahn und/oder eines Auftreffpunktes mit einbezogen wird, um eine besonders präzise und an die aktuellen Betriebsbedingungen des Verladeförderbandes angepasste Festlegung des Abwurfpunktes und/oder des Verlaufs der Abwurfbahn und/oder Lage des Auftreffpunktes zu ermöglichen.

Bei einer Neigungsverstellung des Verladeförderbandes, d.h. bei einer Verstellung des Förderbandes um eine horizontale Achse, kann es vorgesehen sein, dass die Ausrichtung der Blickfeldes der 3D-Kamera gegenüber der Neigungsverstellung kompensiert wird derart, dass das Blickfeld der 3D-Kamera, insbesondere auf den bezüglich des Blickfeldes der 3D-Kamera mittigen Sichtstrahl bezogen, in seinem Winkel zum Boden konstant gehalten wird. Die 3D-Kamera kann hierzu somit um einen Winkel, beispielsweise angetrieben durch eine geeignete gesteuerte Verstelleinrichtung, verstellt, insbesondere verschwenkt, werden, der einer Veränderung der Neigung des Verladeförderbandes zum Boden entspricht. Wird das Verladeförderband ausgehend von einer Ausgangslage somit beispielsweise um 5° abgeschwenkt, wird die 3D-Kamera bezügliches ihrer Position relativ zum Verladeförderband um 5° hochgeschwenkt. Dadurch bleibt auch bei Neigungsverstellungen des Verladeförderbandes die Relativausrichtung der Kamera relativ zum Boden gleich.

Die Steuerung der Verladefunktion im Schritt e) kann bevorzugt derart erfolgen, dass ein An- und/oder Abschalten eines Umlaufbetriebes eines Transportgurtes des Verladeförderbandes gesteuert wird. Konkret wird der Umlaufbetrieb angeschaltet, wenn mithilfe des erfindungsgemäßen Verfahrens die Präsenz einer Transportmulde in einem zum Abwurfpunkt und/oder der (theoretischen) Abwurfbahn und/oder des (theoretischen) Auftreffpunktes des Schüttgutes liegenden Bereiches mit Hilfe des erfindungsgemäßen Verfahrens ermittelt worden ist. Ist dies nicht (mehr) der Fall, kann der Umlaufbetrieb abgeschaltet werden. Für das Anschalten des Umlaufbetriebes, d.h. zu einem Zeitpunkt, zu dem noch kein Überladevorgang besteht und entsprechend auch nicht auf eine reale Abwurfbahn und/oder einen realen Auftreffpunkt zurückgegriffen werden kann, besteht bevorzugt die Möglichkeit auf eine theoretische Abwurfbahn und/oder einen theoretischen Auftreffpunkt Bezug zu nehmen. Solche theoretischen Werte und/oder Verläufe können beispielweise im Vorfeld empirisch oder experimentell ermittelt und elektronisch hinterlegt werden. Hierbei handelt es sich somit um grobe Referenzwerte, die dann zur Orientierung dienen, wenn noch gar kein Überladeprozess erfolgt. Ergänzend oder alternativ kann es auch vorgesehen sein, dass ein Beschleunigen oder Bremsen der Umlaufgeschwindigkeit des Transportgurtes des Verladeförderbandes erfolgt. Dies kann beispielsweise dann sinnvoll sein, wenn die Abwurfweite des Schüttgutes vom Verladeförderband variiert werden soll. Weiter ergänzend oder alternativ kann es auch vorgesehen sein, dass die Steuerung derart erfolgt, dass ein Schwenken des Verladeförderbandes um eine vertikale und/oder um eine horizontale Schwenkachse gesteuert wird. So kann der Abwurfpunkt und/oder die Abwurfbahn und/oder der Auftreffpunkt des Schüttgutes in begrenztem Umfang an die ermittelte Position der Transportmulde angepasst und optimiert werden, ohne dazu die Position der übrigen Maschine verändern zu müssen. Die vorstehenden Funktionen betreffen Betriebseigenschaften des Verladeförderbandes direkt. Es kann aber auch vorgesehen sein, dass Betriebsparameter der übrigen Maschine in Abhängigkeit vom Ergebnis der Prüfung, ob sich eine Transportmulde im gewünschten Bereich befindet oder nicht, gesteuert werden. Eine Möglichkeit hierzu ist beispielsweise, dass die Maschine in ihrer Fortbewegung gebremst wird, beispielsweise wenn keine Transportmulde im von der 3D-Kamera erfassten Bereich in gewünschter Position vorhanden ist. Ist die Maschine eine Straßenfräse, wird dadurch der Fräsprozess unterbrochen und es wird kein weiteres Schüttgut auf das Verladeförderband aufgeladen. Ergänzend oder alternativ ist es selbstverständlich auch möglich, dass eine Betätigung einer Signaleinrichtung in Abhängigkeit vom vorstehend beschriebenen Auswertungsergebnis erfolgt. Beispielsweise ist es möglich, dem Bediener der Maschine und/oder des Transportfahrzeugs ein Signal anzuzeigen, wenn die Transportmulde in einer für den Überladeprozess günstigen Position ist. Insbesondere dem Bediener der Maschine kann ferner angezeigt werden, wenn gerade keine Transportmulde in einer für den Überladeprozess geeigneten Position detektiert wird. Er kann dann entsprechende Maßnahmen ergreifen, dass der Überladevorgang gestoppt wird, um ein ungewünschtes Herabfallen von Schüttgut außerhalb einer Transportmulde zu verhindern, beispielsweise durch Stoppen eines Arbeitsvorgangs etc. Die Anzeige des Signals kann auf übliche Art und Weise erfolgen, beispielsweise akustisch und/oder optisch, mittels Signallampen und/oder einem Anzeigebildschirm etc. Die Signaleinrichtung kann ferner mit weiteren für die Gewährleistung eines einwandfreien Überladeprozesses assoziierten Sensorelementen verknüpft sein, wie beispielsweise einem Abstandssensor, der den Abstand des Verladeförderbandes beispielsweise in horizontaler Richtung zur Transportmulde überwacht, um eine Kollision zwischen der Transportmulde und dem Verladeförderband zu verhindern. Einer oder mehrerer solcher Abstandssensoren können insbesondere in solchen Bereichen angeordnet sein, die nicht vom Blickfeld der 3D-Kamera erfasst werden, beispielsweise in einem Bereich unterhalb des Verladeförderbandes nah an der Maschine.

Das erfindungsgemäße Verfahren kann ferner ergänzend genutzt werden, um eine gezielte, beispielsweise möglichst gleichmäßige, Befüllung der Transportmulde zu überwachen und zu steuern. Beispielsweise kann die vorstehend erwähnte zweidimensionale Referenzebene derart festgelegt werden, dass sie knapp unterhalb einer maximalen Füllhöhe der Transportmulde liegt. Tauchen im vorliegenden Auswertungsprozess der vorhandenen Bildpunktdaten im Bereich der Innenfläche der Transportmulde Bildpunkt oberhalb dieser Referenzebene auf, bedeutet dies, dass in diesem Bereich der Transportmulde die maximale Füllhöhe erreicht worden ist. Die vorstehend beschriebenen Steuerungsoptionen zur Ausrichtung des Verladeförderbandes relativ zur Maschine können dann gezielt von der Steuereinheit dahingehend genutzt werden, den Abwurfpunkt und/oder die Abwurfbahn und/oder den Auftreffpunkt des Schüttgutes in einen Bereich der Transportmulde zu dirigieren, in der die maximale Füllhöhe noch nicht erreicht ist und/oder in weniger beladene Bereiche, um insgesamt innerhalb der Transportmulde eine möglichst gleichmäßige Materialverteilung zu erreichen und eine Überladung zu verhindern.

Das erfindungsgemäße Verfahren kann auch eine Raumüberwachung mithilfe der 3D-Kamera umfassen. Dazu ist es vorgesehen, dass eine geeignete Bildverarbeitungssoftware vorhanden ist, die derart ausgebildet ist, dass sie zur Erkennung von Objekten, insbesondere Personen, in den von der 3D-Kamera aufgenommenen Bilddaten ausgebildet ist. In Betriebsphasen, in denen beispielsweise kein Transportfahrzeug zur Beladung/Entladung vorhanden ist, wie es beispielsweise bei einer Transportfahrt der selbstfahrenden Straßenbau- oder Tagebaumaschine der Fall sein kann, kann die 3D-Kamera dann zur Erhöhung der Betriebssicherheit beitragen, indem dem Fahrer der Straßenbau- oder Tagebaumaschine entweder von der 3D-Kamera und der Bildverarbeitungssoftware im Blickfeld der 3D-Kamera identifizierte Hindernisse, insbesondere Personen, angezeigt werden und/oder dieses Ereignis akustisch signalisiert wird.

Die von der 3D-Kamera aufgenommenen Bilddaten können bevorzugt auch zur Rangierhilfe für den Fahrer des Transportfahrzeugs herangezogen werden. Beispielsweise kann eine Signalisiereinrichtung vorgesehen sein, die in Abhängigkeit von der ermittelten Relativlage der Transportmulde akustische und/oder optische Rangierbefehle an den Fahrer des Transportfahrzeugs ausgibt.

Es kann vorgesehen sein, dass die, insbesondere mithilfe einer geeigneten Bildverarbeitungssoftware, ermittelte Lage der Transportmulde und/oder identifizierter Teilstrukturen, die als Teil der Transportmulde angenommen werden, in ein Kamerabild der 3D-Kamera eingeblendet und dem Fahrer angezeigt werden. Auf diese Weise kann der Fahrer schnell prüfen, ob das, was die Bildverarbeitungssoftware rechnerisch aus den Bilddaten der 3D-Kamera als Transportmulde oder Teil derselben annimmt auch den realen Gegebenheiten entspricht. Ergänzend oder alternativ kann es auch vorgesehen sein, dass der Fahrer in einem von der 3D-Kamera aufgenommenen und ihm angezeigten Bild die Transportmulde oder Teile derselben, beispielsweise den Verlauf einer oberen Ladekante, identifiziert und markiert, beispielsweise mithilfe eines Touchscreens. Diese Markierungen können anschließend von der Bildverarbeitungssoftware zur Identifizierung der Transportmulde oder von Teilen derselben genutzt werden, indem beispielsweise charakteristische Punktverteilungen des markierten Bereiches gesucht werden. Dies kann insbesondere bei der Verwendung von Spezialtransportfahrzeugen hilfreich sein. Ergänzend oder alternativ kann er beispielsweise auch den Startpunkt der Beladung etc, festlegen.

Bei einer Veränderung der Seitenverschwenkung und/oder der Neigung des Verladeförderbandes kann es vorgesehen sein, dass das von der 3D-Kamera aufgenommene Bild rechnerisch an diese Positionsveränderung angepasst wird.

Ein weiterer Aspekt der Erfindung liegt in einer, insbesondere selbstfahrenden, Straßenbau- oder Tagebaumaschine (nachstehend als Maschine bezeichnet), die zur Durchführung des erfindungsgemäßen Verfahrens ausgebildet ist. Maschinen, bei denen die Vorteile der Erfindung besonders deutlich hervortreten, sind beispielsweise sogenannte Beschicker oder Bodenfräsmaschinen, ganz besonders Straßenfräsen oder Surface-Miner. Diesen Maschinen gemein ist, dass sie ein von der übrigen Maschine und insbesondere dessen Maschinenrahmen abragendes Förderband aufweisen. Erfindungsgemäß ist es nun vorgesehen, dass an diesem Förderband eine 3D-Kamera angeordnet ist, die mit ihrem Blickfeld zumindest teilweise in Richtung des Bodenuntergrundes, das heißt nach unten, ausgerichtet ist, wobei dies auch eine Schrägausrichtung mit umfasst, die so ausgeprägt sein kann, dass auch ein Teil des Horizontes mit erfasst wird. Weiterhin ist wesentlich, dass die Maschine eine mit der 3D-Kamera in Signalverbindung stehende Steuereinheit aufweist. Der Ausgestaltung dieser Steuereinheit kommt wesentliche Bedeutung zu, da sie zur Durchführung der im erfindungsgemäßen Verfahren vorgesehenen Bildbearbeitungs- und -auswertungsschritte ausgebildet ist und in Abhängigkeit der von der 3D-Kamera aufgenommenen Bilddaten bzw. Bildpunkte wenigstens eine Verladefunktion des Förderbandes steuert. Die Steuereinheit umfasst somit einen Mikroprozessor auf, der zur Durchführung der erfindungsgemäßen Bildbearbeitungs- und -auswertungsschritte ausgebildet ist und insbesondere bevorzugt unterhalb einer Referenzebene liegende Bildpunkte in einer 2-D-Projektion der aufgenommenen Bildpunkte virtuell ausblenden kann. Hinsichtlich der konkreten Einzelheiten der durch die Steuereinheit durchzuführenden Bildbearbeitungs- und -auswertungsschritte wird auf die Ausführungen zum erfindungsgemäßen Verfahren Bezug genommen. Die dortigen Ausführungen gelten entsprechend auch für die erfindungsgemäße Maschine.

Das Blickfeld der 3D-Kamera kann vorzugsweise derart ausgerichtet sein, dass die 3D-Kamera gegenüber einer von ihr zum Boden gerichteten Lotrechten auch einen vom Abwurfpunkt des Verladeförderbandes abgewandten bzw. einer Fahreinrichtung, insbesondere einem Kettenlaufwerk, der Straßenbau- oder Tagebaumaschine zugewandten Bodenbereich aufnimmt. Auf diese Weise kann das Blickfeld der 3D-Kamera unterhalb des Verladeförderbandes vergrößert werden und drohenden Kollisionen kann besser vorgebeugt werden. Ferner kann dadurch das Transportfahrzeug mit seiner Transportmulde näher an die Straßenbau- oder Tagebaumaschine herangeführt werden und dabei gleichzeitig von der 3D-Kamera überwacht werden.

Die 3D-Kamera zeichnet sich dadurch aus, dass sie Bildpunkte mit Entfernungsinformationen zur Position der 3D-Kamera verknüpft. Damit kann jedem Bildpunkt eine Raumkoordinate zugeordnet werden, was vorliegend in der vorstehend beschriebenen Weise ausgenutzt wird, um beispielsweise gezielt die räumliche Lage der Bildpunkte zueinander berücksichtigen zu können und/oder bestimmte Bildpunkte unterhalb einer virtuellen Referenzebene für die weitere Bildauswertung auszublenden. Grundsätzlich eignen sich zur konkreten Ausgestaltung der 3D-Kamera somit solche 3D-Kameras, die zur Aufnahme von Bildpunkten in Kombination mit Raumkoordinaten geeignet sind. Vorliegend handelt es sich bei der 3D-Kamera daher bevorzugt um eine Stereokamera, eine ToF-Kamera (*time* of flight-Kamera), wie insbesondere eine PMD-Kamera (photonic mixer device), einen Matrix-Lidar-Sensor oder eine plenoptische Kamera.

Je genauer vorliegend die Position und Ausrichtung der 3D-Kamera relativ zum Verladeförderband und/oder zur übrigen Maschine und/oder zum Bodenuntergrund bekannt ist, desto exakter kann die Relativlage der Transportmulde zur Maschine ermittelt werden bzw. können die von der 3D-Kamera aufgenommenen Bildpunkte hinsichtlich ihrer konkreten Position im dreidimensionalen Raum zugeordnet werden. Häufig ist das Verladeförderband um eine vertikale Achse seitenverschwenkbar und/oder um eine horizontale Achse in seiner Neigung verstellbar. Es ist darüber hinaus bekannt, dass Maschinen, insbesondere Bodenfräsmaschine, wie Straßenfräsen und/oder Surface-Miner, auf einem gegenüber dem Bodenuntergrund höhenverstellbaren Maschinenrahmen angeordnet sind, sodass der Maschinenrahmen gegenüber dem Bodenuntergrund und damit das an ihm angeordnete Verladeförderband unterschiedliche Relativlagen zum Bodenuntergrund, insbesondere in Vertikalrichtung, einnehmen können. Weiter ergänzend oder alternativ ist es auch möglich, dass die 3D-Kamera selbst am Verladeförderband verstellbar ist, um beispielsweise eine Nachjustierung und/oder optimale Selbstausrichtung der 3D-Kamera in Abhängigkeit vom Abwurfpunkt und/oder der Abwurfbahn, der Dimensionierung der vorhandenen Transportmulde etc., zu ermöglichen. Bevorzugt umfasst die Maschine daher erfindungsgemäß wenigstens eine Wegmesseinrichtung, die zur Ermittlung einer Position von zwei relativ zueinander verstellbaren Elementen, wie beispielsweise dem Maschinenrahmen zu den Fahrwerken, dem Verladeförderband zum Maschinenrahmen oder der 3D-Kamera zum Verladeförderband, ausgebildet ist. Wesentlich ist somit, dass die Wegmesseinrichtung die Relativlage zweier zueinander verstellbarer Elemente erfasst, bei denen eine Änderung ihrer Relativlage zueinander eine Änderung der Position der 3D-Kamera im Raum bzw. insbesondere im Verhältnis zum Bodenuntergrund hat. Die Wegmesseinrichtung/en steht/en in Signalverbindung mit der Steuereinheit, sodass diese bei der Ermittlung der Raumlage durch die 3D-Kamera aufgenommener Bildpunkte die Messwerte der Wegmesseinrichtung/en mit berücksichtigen kann.

Eine solche Wegmesseinrichtung kann beispielsweise derart ausgebildet sein, dass sie die Höhenposition eines höhenverstellbaren Maschinenrahmens gegenüber wenigstens einer Fahreinrichtung ermittelt. Bei Straßenbau- oder Tagebaumaschinen, die den Bodenuntergrund Auffräsen, wie beispielsweise Straßenfräsen oder Surface-Miner, sind die Fahreinrichtungen häufig zumindest teilweise und insbesondere alle über höhenverstellbare Hubsäulen mit dem Maschinenrahmen verbunden. Durch eine Höhenverstellung der Hubsäulen kann dann beispielsweise die Frästiefe im Fräsprozess variiert werden und/oder die Fräsvorrichtung zu Transportzwecken aus dem Bodenuntergrund ausgehoben werden. Es ist möglich, an einer, mehreren oder allen der vorhandenen Hubsäulen jeweils eine Wegmesseinrichtung vorzusehen. Insbesondere kann zudem jede der vorhandenen Fahreinrichtungen über eine Hubsäule mit dem Maschinenrahmen verbunden sein. Die Signale der Wegmesseinrichtungen werden unter anderem dazu genutzt, die Ausrichtung der Maschine gegenüber dem Bodenuntergrund zu ermitteln. Ergänzend oder alternativ kann eine Wegmesseinrichtung vorgesehen sein, die die Höhenposition eines Seitenschildes eines Fräswalzenkastens gegenüber einem höhenverstellbaren Maschinenrahmen ermittelt. Derartige höhenverstellbare Seitenschilde sind häufig an den zur Rotationsachse der jeweiligen Fräswalze stirnseitigen Enden der Fräswalze angeordnet, um eine Seitenabdichtung eines im Stand der Technik bekannten Fräswalzenkastens zu ermöglichen. Die Seitenschilde gleiten im Fräsprozess üblicherweise auf dem Bodenuntergrund, sodass die Ermittlung der Position der Seitenschilde indirekt dazu herangezogen werden kann, die Position des höhenverstellbaren Maschinenrahmens und beispielsweise auch die Neigung der Maschine um eine quer oder Längsachse zu ermitteln. Weiter ergänzend oder alternativ ist es möglich, die Wegmesseinrichtung derart anzuordnen, dass sie die Verstellposition eines Linearaktors ermittelt, der eine Verschwenkung eines am Maschinenrahmen schwenkbar gelagerten Förderbandes um eine horizontale Schwenkachse antreibt. Mithilfe dieses Wegmesssignales kann somit die Relativlage des Verladeförderbandes zum Maschinenrahmen in Bezug auf die horizontale Schwenkachse und damit der am Verladeförderband angeordneten 3D-Kamera zum Maschinenrahmen bestimmt werden. Weiter ergänzend oder alternativ ist es schließlich beispielsweise auch möglich, die Wegmesseinrichtung derart auszulegen, dass sie die Verstellposition eines Linearaktors ermittelt, der eine Verschwenkung eines am Maschinenrahmen schwenkbar gelagerten Förderbandes um eine vertikale Schwenkachse antreibt, wodurch letztlich die Relativlage des Verladeförderbandes zum Maschinenrahmen um diese vertikale Schwenkachse ermittelbar ist.

Ergänzend oder alternativ zu den vorstehend genannten Wegmesseinrichtungen kann die Relativlage zweier zueinander um eine Achse schwenkbarer Elemente, wie beispielsweise des zum Maschinenrahmen um eine vertikale und/oder horizontale Achse schwenkbaren Verladeförderbandes, auch mithilfe eines Winkelsensors ermittelt und überwacht werden. Bevorzugt ist der Winkelsensor derart angeordnet, dass er den vertikalen und/oder horizontalen Schwenkwinkel eines schwenkbar an einem Maschinenrahmen der Baumaschine gelagerten Förderbandes ermittelt. Ergänzend oder alternativ kann ein Winkelsensor auch derart angeordnet sein, dass er den Schwenkwinkel der 3D-Kamera relativ zu einem Förderband und/oder einem Maschinenrahmen ermittelt. Diese Variante ist dann sinnvoll, wenn die 3D-Kamera um eine Achse verschwenkbar am Verladeförderband angeordnet ist.

Das Sensorsystem, auf das die Steuereinheit zur Bestimmung der Raumlage der durch die 3D-Kamera ermittelten Bildpunkte zurückgreift, kann darüber hinaus weiter ergänzend oder alternativ wenigstens einen Lagesensor umfassen. Hierbei kann es sich insbesondere um einen Beschleunigungssensor handeln, beispielsweise um einen piezoelektrischen Beschleunigungssensor und/oder geeignetes MEMS. Ein solcher Lagesensor kann insbesondere dazu genutzt werden, die Ausrichtung der 3D-Kamera relativ zum Bodenuntergrund zu ermitteln, wobei bevorzugt ein Lagesensor an einem Förderband und/oder unmittelbar an der 3D-Kamera angeordnet ist und/oder ein weiterer Lagesensor an wenigstens einer der Fahreinrichtungen angeordnet ist. Zu den Möglichkeiten mithilfe dieser Anordnung die Relativposition der Transportmulde zu detektieren und den Überladeprozess zu steuern , wird auf die diesbezüglichen Ausführungen zum erfindungsgemäßen Verfahren Bezug genommen.

Zweckmäßigerweise ist es bevorzugt, wenn die Steuereinheit eine Signalverbindung mit wenigstens einem Winkelsensor und/oder einem Lagesensor und/oder wenigstens einer Wegmesseinrichtung aufweist. Alternativ ist es auch möglich, dass die Steuereinheit mit einer oder mehreren anderen Steuereinheiten in Signalverbindung steht und auf Auswertungsergebnisse dieser Steuereinheiten, die auf Grundlage eines Messwertes eines oder mehrerer der vorhergehenden Sensoren beruht, zurückgreift.

Es kann vorgesehen sein, dass die mithilfe der 3D-Kamera aufgenommenen Bilddaten mit Bilddaten wenigstens einer weiteren Kamera, beispielsweise einer Kamera, die einen Bereich eines Umfeld der Straßenbau- oder Tagebaumaschine aufnimmt, kombiniert oder zusammengeführt werden, beispielsweise um eine "Rundumansicht" zu erhalten. Hierzu ist dann bevorzugt eine geeignete Bildverarbeitungssoftware vorhanden, die die Bilddaten der wenigstens zwei Kameras zur Darstellung eines gemeinsamen Bildes zusammenführt.

Nachstehend wir die Erfindung anhand der in den Figuren angegebenen Ausführungsbeispiele näher erläutert. Es zeigen schematisch:
Fig. 1: Seitenansicht auf eine Maschine mit einer Fräseinrichtung vom Typ Straßenfräse oder Surface-Miner;
Fig. 2: Seitenansicht auf eine Maschine vom Typ Beschicker;
Fig. 3: Seitenansicht auf einen Arbeitszug mit einer Maschine und einem Transportfahrzeug;
Fig. 4A bis 4C: Draufsicht auf den Arbeitszug aus Fig. 3 in verschiedenen Verladesituationen;
Fig. 5: vertikale Querschnittsansicht auf einen Aufnahmebereich einer 3D-Kamera;
Fig. 6: Draufsicht auf eine Transportmulde mit angegebener Bildpunktverteilung;
Fig. 7: Ablaufdiagramm eines Verfahrens; und
Fig. 8: Prinzipaufbau einer Steueranordnung.

Gleiche und/oder funktionsgleiche Bauteile sind in den Figuren mit gleichen Bezugszeichen versehen, wobei nicht jedes sich in den Figuren wiederholende Bauteil zwangsläufig in jeder Figur separat gekennzeichnet ist.

In den Figuren ist mit den Achsen X, Y und Z ein räumliches Koordinatenbezugssystem angegeben. Hierauf beziehen sich die vorstehenden und nachstehenden Ausführungen. Wichtig ist, dass die Bezeichnungen "vertikal" und "horizontal" vorliegend in Bezug auf den Bodenuntergrund zu verstehen sind. Dies bedeutet, dass der Bodenuntergrund in der XZ-Ebene liegt, und die lotrechter bzw. dazu Anfangszeichen auf vertikale" senkrecht zu dieser Ebene verläuft. Steht die Maschine an einem Hang mit einer Neigung bzw. einer Steigung, ist die Lage dieses räumlichen Koordinaten Bezugssystems entsprechend angepasst.

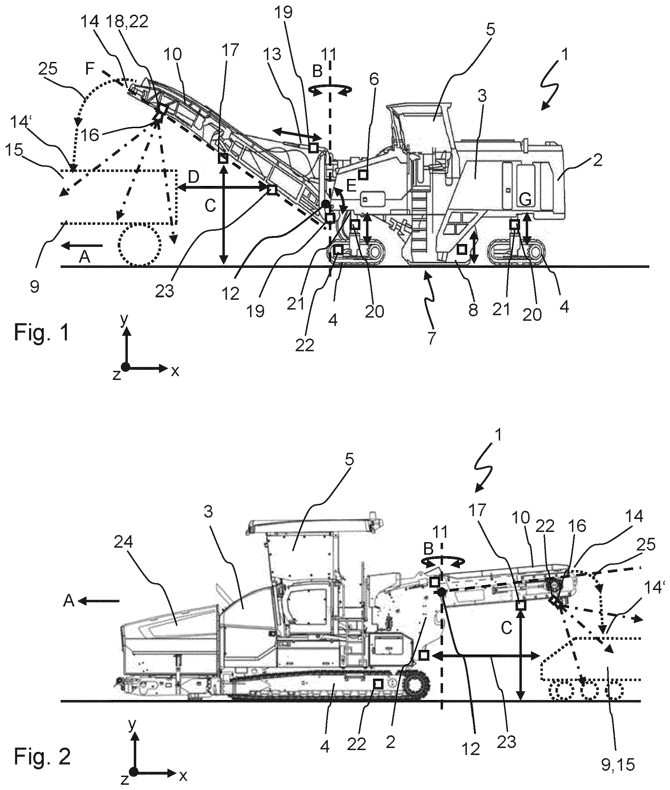

Figur 1 zeigt eine selbstfahrende Straßenbau- oder Tagebaumaschine (nachfolgend als Maschine 1 bezeichnet), im vorliegenden Ausführungsbeispiel konkret vom Typ Bodenfräsmaschine, in einer Seitenansicht. Wesentliche Elemente der Maschine 1 sind ein Maschinenrahmen 2, ein Antriebsmotor 3, Fahreinrichtungen 4, ein Fahrstand 5 sowie eine Steuereinheit 6. Der Maschinenrahmen 2 bezeichnet die wesentliche Tragstruktur der Maschine 1. Der Antriebsmotor 3 stellt die für den Fahr- und Arbeitsbetrieb der Maschine 1 erforderliche Antriebsenergie zur Verfügung. Der Antriebsmotor 3 ist beispielsweise ein Dieselmotor. Die Maschine 1 in Fig. 1 und auch die weiteren von der Erfindung umfassten Maschinen sind selbstfahrend ausgebildet. Die Fahreinrichtungen 4, bei denen es sich um Kettenlaufwerke und/oder Räder handeln kann, sind im vorliegenden Ausführungsbeispiel mit Hydromotoren ausgestattet, die über ein nicht näher gezeigte Hydrauliksystem in an sich bekannter Weise angetrieben werden. Alternative Antriebskonzepte sind möglich. Vom Fahrstand 5 aus erfolgt die Bedienung der Maschine 1 im Transport- und Arbeitsbetrieb.

Die Maschine 1 weist ferner eine Arbeitseinrichtung 7 auf. Im vorliegenden Ausführungsbeispiel handelt es sich hierbei um eine Bodenfräseinrichtung, umfassend eine um eine horizontale und quer zur Arbeitsrichtung A der Maschine 1 verlaufende Rotationsachse rotierbare Fräswalze, die innerhalb eines Fräswalzenkastens 8 angeordnet ist. Im Arbeitsbetrieb taucht diese Fräswalze mit einer Frästiefe in den Bodenuntergrund ein und fräst dabei Bodenuntergrundmaterial in einer gewünschten Frästiefe auf. Das dabei entstehende Schüttgut, vorliegend Fräsgut, wird über ein Verladesystem auf ein Transportfahrzeug 9, welches in Figur 1 lediglich angedeutet ist, überladen. Teil des Verladesystems ist ein Verladeförderband 10, welches im vorliegenden Ausführungsbeispiel an der Vorderseite der Maschine 1 an deren Maschinenrahmen 2 aufgehängt ist. Dabei ist das Verladeförderband 10 um eine vertikaler Achse 11 in Pfeilrichtung B verschwenkbar und kann somit in Arbeitsrichtung A von der Maschine 1 aus gesehen nach rechts oder links geschwenkt werden. Dazu ist ein geeigneter Faktor (in Figur 1 nicht näher dargestellt) vorgesehen, beispielsweise ein Hydraulikzylinder, über den diese verstellte Bewegung angetrieben wird. Das Verladeförderband 10 ist auch um eine horizontale Achse 12 in seiner Neigung verstellbar, sodass insbesondere der Abstand des der Maschine 1 abgewandten Endes des Verladeförderbandes 10 zum Bodenuntergrund veränderbar ist. Hierzu ist ein Aktor 13, konkret in Form eines Hydraulikzylinders, vorgesehen, der zwischen dem Verladeförderband 10 und dem Maschinenrahmen 1 angeordnet ist und dessen Längenverstellung die Neigung des Verladeförderbandes 10 variiert.

Beim vorliegenden Ausführungsbeispiel sind die Fahreinrichtungen 4 ferner über Hubsäulen 21 mit dem Maschinenrahmen 2 verbunden. Dabei ist es bekannt, insbesondere bei sogenannten Heckrotor Fräsen nur die beiden auf Höhe der Bodenfräseinrichtung befindlichen Fahreinrichtungen über Hubsäulen 21 mit dem Maschinenrahmen zu verbinden oder sämtliche der vorhandenen Fahreinrichtungen, wie beim vorliegenden Ausführungsbeispiel vom Mittelrotortyp, über in vertikaler Richtung verstellbare Hubsäulen mit dem Maschinenrahmen zu verbinden. Damit ist der Abstand des Maschinenrahmens 2 in vertikaler bzw. lotrechter Richtung (bzw. in Pfeilrichtung G) zum Bodenuntergrund variabel, was beim vorliegenden Maschinentyp insbesondere dazu ausgenutzt werden kann, Frästiefe einzustellen und zu variieren und/oder Taumel-oder Kippbewegungen der Maschine 1 beim Überfahren von Bodenhindernissen bzw. Unebenheiten, wie beispielsweise einer Fräskanten, entgegenzuwirken. Die Hubsäulen 21 können beispielsweise einen Hydraulikzylinder umfassen, der zur Höhenverstellung des Maschinenrahmens 2 entsprechend verstellt wird.

Für die in Figur 1 angedeutete Arbeitssituation, bei der im Arbeitsprozess anfallendes Schüttgut, vorliegend in Form von Fräsgut, auf das Transportfahrzeug 9 bzw. dessen Transportmulde mithilfe des Verladeförderbandes 10 überladen wird, ist es nun wichtig, sicherzustellen, dass das Verladeförderband am Abwurfpunkt 14 verlassende Schüttgut innerhalb einer Transportmulde 15 des Transportfahrzeugs 9 auftrifft. Dies wird vorliegend durch die nachstehend näher beschriebener Herangehensweise erreicht

Die Maschine 1 umfasst eine 3D-Kamera 16, vorliegend eine ToF-Kamera vom PMD-Typ, die am Verladeförderband 10 derart angeordnet ist, dass sie mit ihrer Blickrichtung zumindest teilweise in Richtung des Bodenuntergrundes ausgerichtet ist und insbesondere wenigstens einen Teil desjenigen Bereiches unterhalb des Abwurfpunktes 14 erfasst, in dem die Transportmulde 15 des Transportfahrzeugs 9 positioniert sein muss, um sicherzustellen, dass das Schüttgut innerhalb der Transportmulde 15 landet. Dazu kann die 3D-Kamera 16 insbesondere an einer Unterseite des Verladeförderbandes 10 angeordnet sein. Die 3D-Kamera 16 steht in Signalverbindung mit der Steuereinheit 6 und überträgt an diese die von ihr aufgenommenen 3D-Bilddaten, d.h. mit Positionsinformationen verknüpfte Bildpunkte.

Um nun die Position der 3D-Kamera 16 im Verhältnis zum Bodenuntergrund exakter ermitteln zu können, beispielsweise, um die lotrechte Höhe des Abwurfpunktes 14 gegenüber dem Bodenuntergrund ermitteln zu können, ist bevorzugt optional ferner ein Abstandssensor 17 vorhanden, mit dessen Hilfe der vertikale bzw. lotrechte Abstand C der 3D-Kamera 16 zum Bodenuntergrund bestimmbar ist. Es ist möglich, dass dieser Abstandssensor 17 beispielsweise unmittelbar an der 3D-Kamera 16 angeordnet ist. Im vorliegenden Ausführungsbeispiel ist der Abstandssensor 17 alternativ hierzu an der Unterseite des Verladeförderbandes 10 in einer zur Maschine 1 gegenüber der 3D Kamera 16 hin versetzten Position angeordnet. Dabei wird der Abstandssensor 17 unabhängig vom konkreten Ausführungsbeispiel bevorzugt so weit zur Maschinen hin versetzt am Verladeförderband 10 angeordnet, dass er an einer Stelle positioniert ist, an der der Abstandssensor 17 in lotrechter Richtung zum Bodenuntergrund stets einen direkten und freien Blick hat und insbesondere nicht potentiell durch ein Transportfahrzeug verdeckt wird.

Der Abstand sowohl in horizontaler als auch in vertikaler Richtung zwischen dem Abstandssensor 17 und der 3D-Kamera 16 ist bekannt, beispielsweise durch die Art der relativ zueinander ortsfesten Montage am Verladeförderband 10. Wird nun der Abstandswert C (entsprechend dem lotrechten Abstand des Abstandssensors 17 zur Oberfläche des Bodenuntergrundes) gemessen und/oder berechnet, kann letztlich auch der lotrechte Abstand der 3D-Kamera 16 zum Bodenuntergrund berechnet werden. Dies erfolgt ebenfalls durch die Steuereinheit 6. Damit ist es möglich, dass die von der 3D-Kamera 16 aufgenommenen Bildpunkte auch in Relation zum Bodenuntergrund gesetzt werden können. Erfasst die 3D-Kamera 16 beispielsweise Bereiche der Oberkante der Transportmulde 15, ist es möglich, unter Berücksichtigung der mithilfe des Abstandssensors 17 gewonnenen Abstandsdaten gleichzeitig auch beispielsweise den lotrechten Abstand der Ladekante gegenüber dem Bodenuntergrund zu ermitteln. Ferner können die über die 3D-Kamera 16 gewonnen Bilddaten unabhängig von den von der 3D-Kamera 16 gewonnenen Bilddaten in Bezug zum dreidimensionalen Raum gesetzt werden. Erfasst die 3D-Kamera 16 beispielsweise lediglich und ausschließlich Teile der Transportmulde 15, ist es für die Steuereinheit 6 mithilfe des Abstandssensors 16 und/oder der Kenntnis der Lage der 3D-Kamera im Raum möglich, die gewonnenen Bilddaten dennoch in eindeutige Beziehung zum Bodenuntergrund zu setzen.

Grundsätzlich ist es möglich, die 3D-Kamera 16 gegenüber dem Verladeförderband 10 ortsfest anzuordnen. Alternativ hierzu kann es allerdings auch vorgesehen sein, dass die 3D-Kamera 16 bewegbar am Verladeförderband 10 angebracht ist, beispielsweise über eine geeignete gelenkige Halterung. Dies kann dann sinnvoll sein, wenn eine Nachführung der Ausrichtung der Position der 3D-Kamera 16 im Verhältnis zur aktuellen Position der Transportmulde 15 gegenüber dem Abwurfpunkt 14 gewünscht ist, beispielsweise, um eine Ladefläche der Transportmulde 15 vollständig erfassen zu können und/oder die Blickperspektive der 3D-Kamera 16 in Bezug auf die Transportmulde 15 zu optimieren und/oder einen größeren Bereich zu scannen. In einem solchen Fall ist es vorgesehen, dass ein Positionssensor 18 vorhanden ist, mit dem die Relativausrichtung der 3D-Kamera 16 relativ zum übrigen Verladeförderband 10 ermittelbar und überwachbar ist.

Neben dem Abwurfpunkt 14, der beispielsweise entweder in der Steuereinheit 6 hinterlegt und/oder durch eine 3D-Kamera aufgenommen werden kann, ist es beispielsweise ergänzend oder alternativ auch möglich, die Abwurfbahn 25 des das Verladeförderband 10 verlassenden Schüttgutes mit zu berücksichtigen und/oder mit einer oder der 3D-Kamera 16 zu erfassen. Beispielsweise kann ein virtueller Bereich festgelegt werden, innerhalb dessen die Abwurfbahn des Schüttgutes voraussichtlich verläuft. Alternativ kann die Abwurfbahn auch tatsächlich erfasst und von der Steuereinheit mit berücksichtigt werden. Die Kenntnis der Abwurfbahn in Kombination mit den über die 3D-Kamera 16 ermittelten Bilddaten ermöglicht zudem auch die vergleichsweise genaue Festlegung des Auftreffpunktes des Schüttgutes innerhalb der Transportmulde.

Weiter ergänzend oder alternativ kann auch der Auftreffpunkt 14' des das Verladeförderband 10 verlassenden Schüttgutes in der Transportmulde 15 ermittelt und/oder überwacht werden. Dabei ist es möglich, den realen Auftreffpunkt 14' innerhalb der Transportmulde 15 heranzuziehen, der sich auch mit steigender Beladung der Transportmulde 15 ändert. Ergänzend oder alternativ kann allerdings auch ein virtueller Auftreffpunkt 14' genutzt werden, beispielsweise der Schnittpunkt der Abwurfbahn 25 mit der durch die Oberkanten der Transportmulde 15 gebildeten Ebene, wie in den Figuren 1 und 2 gezeigt. Dies ist vorliegend ausreichend, um eine zuverlässige Übertragung des Schüttgutes vom Verladeförderband 10 in die Transportmulde 15 zu gewährleisten.

Wie vorstehend bereits erwähnt, kann das Verladeförderband 10 häufig um eine vertikale Achse 11 (Bewegungspfeil B) und/oder horizontale Achse 12 (Bewegungspfeil E) relativ zur Maschine 1 verstellt werden. Dazu können weitere Positionssensoren 19 vorgesehen sein, die die Relativpositionen um die Achsen 11 und/oder 12 des Verladeförderbandes 10 gegenüber der übrigen Maschine 1 detektieren. Bei diesen Positionssensoren 19 kann es sich beispielsweise um Wegmesseinrichtungen und/oder Winkelsensoren handeln. Beispielsweise kann in den Linearaktor 13, über den die Neigung des Verladeförderbandes 10 gegenüber dem Maschinenrahmen 2 verstellbar ist, ein Positionssensor 19, insbesondere in Form eines Weg Messsensors, integriert werden. Dadurch kann der Winkel zwischen der Längsachse F und beispielsweise der Achse 11 bzw. der Neigungswinkel des Verladeförderbandes 10 gegenüber der Maschine 1 ermittelt werden.

Das Verladeförderband 10 umfasst beispielsweise einen angetriebenen und umlaufend geführten Fördergurt. Es kann vorgesehen sein, dass die Umlaufgeschwindigkeit des Fördergurtes veränderbar ist, beispielsweise um die Abwurfweite des Schüttgutes bzw. den Verlauf der Abwurfbahn des Schüttgutes variieren zu können. Es kann vorgesehen sein, dass dies durch die Steuereinheit 6 erfolgt.

Weiter ergänzend oder alternativ ist es möglich, Sensoren vorzusehen, die die Lage des Maschinenrahmens 2 gegenüber den Fahreinrichtungen 4 ermitteln und/oder überwachen. Im vorliegenden Ausführungsbeispiel kann es dazu vorgesehen sein, dass in die Hubsäulen 21 Positionssensoren 20, insbesondere in Form von Wegmesssensoren, integriert sind. Mithilfe dieser Sensoren kann insbesondere die Lage des Maschinenrahmens 2 gegenüber dem Bodenuntergrund ermittelt werden. Dies kann durch die Steuereinheit 6 vorliegend insofern berücksichtigt werden, als dass dadurch eine Anpassung der Berechnung der Position der 3D-Kamera 16 bei einer Höhenverstellung über die Hubsäulen 21 rechnerisch mit einbezogen werden kann.

Eine weitere Möglichkeit, das Sensorsystem der vorliegenden Maschine 1 in Bezug auf eine möglichst exakte Ermittlung und Festlegung der Position der 3D-Kamera 16, insbesondere gegenüber dem Bodenuntergrund, zu ermitteln und zu überwachen besteht darin, Lagesensoren 22, insbesondere in Form von Beschleunigungssensoren, an einer oder mehrerer der Fahreinrichtungen 4 und/oder beispielsweise der 3D-Kamera 16 vorzusehen. Mithilfe solcher Lagesensoren 22 können ebenfalls die Ausrichtung einzelner Elemente, wie beispielsweise der 3D-Kamera, gegenüber einer vertikalen Referenzlinie (Schwerkraftrichtung) ermittelt werden. Darüber hinaus ist es möglich, beispielsweise durch einen solchen Lagesensor 22 an einer oder mehrerer der Fahreinrichtungen 4 Steigungen im Gelände zu erkennen, um insbesondere auch solche Einflussfaktoren bei der Bestimmung der Lage der 3D-Kamera 16 im Verhältnis zum Bodenuntergrund mit berücksichtigen zu können.

Die vorstehend beschriebene Anordnung kann ferner um einen Abstandssensor 23 ergänzt werden, der den horizontalen Abstand C bzw. den Abstand der Transportmulde senkrecht zur Lotrechten der 3D-Kamera 16 zum Boden hin ermittelt und überwacht. Dieser Abstandssensor 23 ist zur Positionsbestimmung der 3D-Kamera 16 nicht erforderlich. Dieser dient vielmehr dazu sicherzustellen, dass eine Kollision der Transportmulde 15 mit dem Verladeförderband 10 verhindert wird. Ergänzend kann allerdings auch dieser Abstandssensor 23 mit der Steuereinheit 6 verbunden sein.

Figur 2 zeigt eine Maschine 1 vom Typ Beschicker. Derartige Maschinen werden beim Einbau von Straßenasphalt zum Beladen eines dem Beschicker in Einbaurichtung A nachfolgenden Straßenfertigers genutzt. Dazu weist die Maschine 1 gemäß Figur 2 einen Aufnahmebunker 24 auf, der mit Schüttgut, vorliegend in Form von Einbaumaterial, mithilfe eines Transportfahrzeugs in an sich bekannter Weise beladen wird. Dieses Einbaumaterial wird über ein Fördersystem, welches ein am Maschinenrahmen 2 der Maschine 1 angeordnetes Verladeförderband 10 umfasst, auf einen nachfolgenden Straßenfertiger überladen. Der Bunker, der die Transportmulde 15 des dem Beschicker nachfolgenden Straßenfertigers (Transportfahrzeug 9) darstellt, ist in Figur 2 auf der rechten Seite angedeutet. Das Verladeförderband 10 ist ebenfalls um eine vertikale Achse 11 und um eine horizontale Achse 12 schwenkbar, wie in Figur 2 durch die entsprechenden Bezugszeichen näher angegeben. Ferner ist auch hier eine 3D-Kamera 16 an der Unterseite des Verladeförderbandes 10 angeordnet und derart ausgerichtet, dass sie auf wenigstens einen Teil der Transportmulde 15 des Straßenfertiger ausgerichtet ist. Auch ein Abstandssensor 17 ist in der im Zusammenhang mit Figur 1 beschriebenen Weise am Verladeförderband 10 angeordnet. Ferner können an den Fahreinrichtungen 4 und/oder beispielsweise der 3D-Kamera 16 Lagesensoren 22, insbesondere in Form von Beschleunigungssensoren, angeordnet sein. Hinsichtlich weiterer Einzelheiten wird auf die sprechenden Ausführungen aus Figur 1 Bezug genommen.

Mit dem vorstehend beschriebenen System ist es möglich, die Lage der 3D Kamera 16 eindeutig innerhalb dieses räumlichen Koordinatenbezugssystems zu bestimmen. Dadurch kann auch jedem von der 3D-Kamera 16 aufgenommenen Bildpunkt somit eine eindeutige Lage innerhalb dieses räumlichen Koordinatenbezugssystems zugewiesen werden. Dies wird erfindungsgemäß in der nachstehend beschriebenen Weise ausgenutzt.

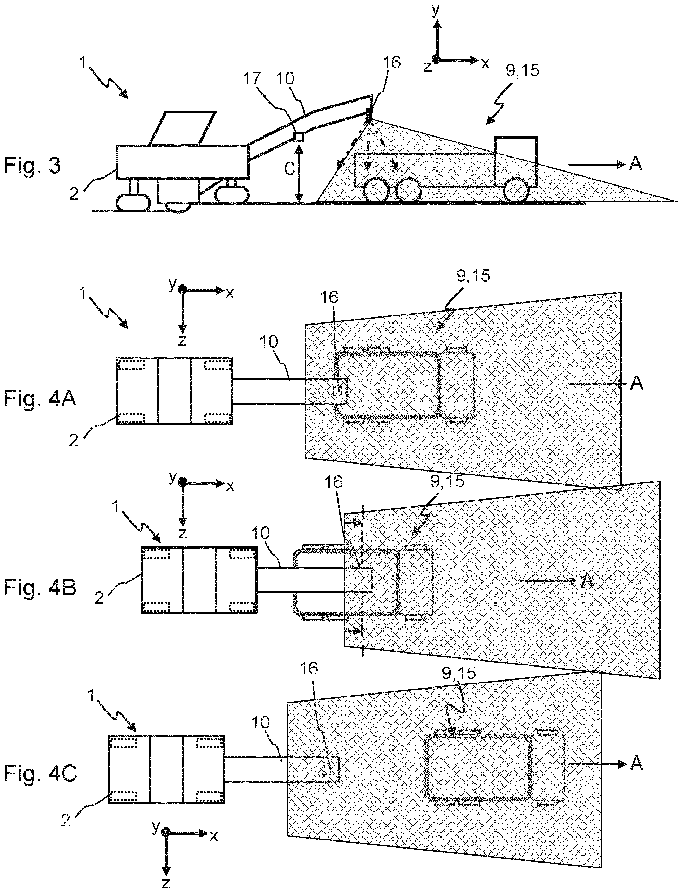

Die Figuren 3 und 4A bis 4C veranschaulichen den Ablauf eines typischen Überladevorgangs von Schüttgut zwischen der Maschine 1, wie beispielsweise in den Figuren 1 und 2 gezeigt, auf ein Transportfahrzeug während des laufenden Arbeitsprozesses. Wesentlich ist dabei, dass das Transportfahrzeug 9 mit seiner Transportmulde 15 derart relativ zur Maschine 1 positioniert werden soll, dass das vom Verladeförderband 10 herabfallende Schüttgut innerhalb der Transportmulde 15 landet. Im laufenden Arbeitsprozesses ändern die Maschine 1 und das Transportfahrzeug 9 jedoch immer wieder die Relativposition zueinander, wie beispielsweise in den Figuren 4A (maximaler horizontaler Abstand zwischen der Maschine 1 und dem Transportfahrzeug 9, um noch eine vollständige Überladung des Schüttgut zu ermöglichen), 4B (minimaler horizontaler Abstand zwischen der Maschine 1 und dem Transportfahrzeug 9, um einerseits noch eine vollständige Überladung des Schüttgut zu ermöglichen und andererseits eine Kollision zwischen dem Transportfahrzeug 9 und dem Verladeförderband 10 der Maschine 1 noch zu verhindern) und 4C (keine Überladung von Schüttgut möglich, da das Transportfahrzeug zu weit von der Maschine bzw. dem Abwurfpunkt 14 des Verladeförderbandes 10 entfernt ist, beispielsweise im Falle eines An- oder Abfahrens des Transportfahrzeugs relativ zu Maschine 1) näher veranschaulicht. Aufgrund verschiedener Fahrgeschwindigkeiten der beiden Fahrzeuge kann es somit sein, dass diese beiden Fahrzeuge während des Überladevorgangs somit bezüglich ihres Relativabstandes zueinander zwischen den beiden Fig. 4A und 4B pendeln. Die Figuren 3 und 4A bis 4C verdeutlichen ferner den ungefähren Abdeckungsbereich der 3D-Kamera 16 bzw. deren Blickkegel im vorliegenden Ausführungsbeispiel, wobei dies nur beispielhaft und nicht beschränkend zu verstehen ist.

Das erfindungsgemäße Verfahren und die erfindungsgemäße Anordnung ermöglicht es nun, in Bezug auf den dreidimensionalen Raum die Lage der Transportmulde 15 oder zumindest eines Teiles davon relativ zur Maschine 1 und insbesondere relativ zum Abwurfpunkt 14, zum Auftreffpunkt 14' bzw. zur Abwurfbahn 25 zu detektieren und in Abhängigkeit von diesem Detektionsergebnis Steuerungsmaßnahmen einzuleiten.

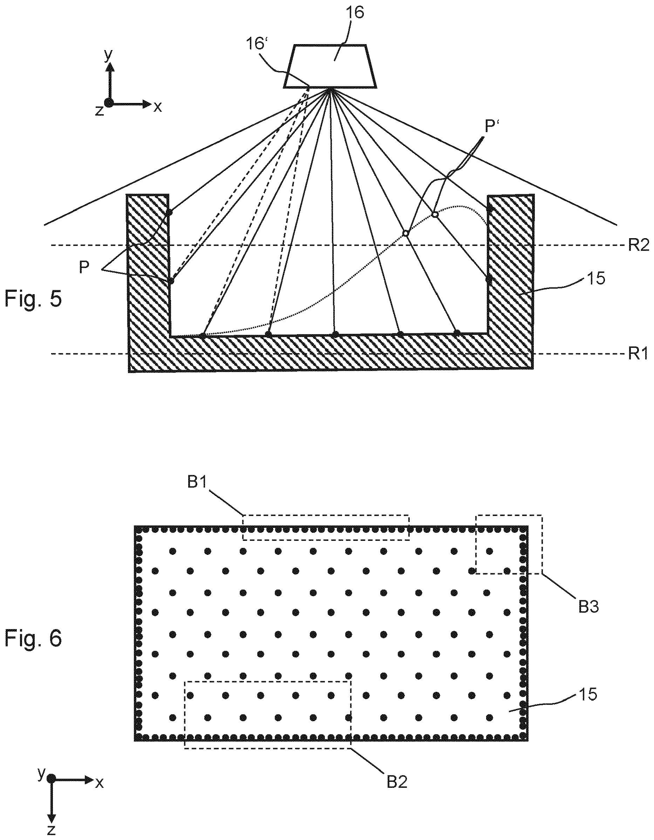

Figur 5 zeigt anhand einiger Bildpunkte entlang der Schnittlinie I-I aus Figur 4B die Entwicklung einer 3D-Punktwolke der Transportmulde 15, beispielsweise mittels einer ToF-Kamera vom PMD-Typ. Gestrichelt in Figur 5 sind weiter erläuternd exemplarisch Blickstrahlen einer zweiten Kamera 16' einer Stereokamera 16/16' angegeben. Dabei ist insgesamt ersichtlich, dass hierbei in vertikaler Richtung übereinanderliegende Bildpunkte P an den inneren Außenoberflächen der Seitenwände der Transportmulde erhalten werden, wie in der Fig. 5 an der rechten und linken Innenseite der jeweiligen Seitenwand erkennbar. Diese Bildpunktdaten werden an die vorstehend genannte Steuereinheit übertragen, so dass diese über ein virtuelles Abbild des Verlaufs unter anderem des erfassten Bereiches der Transportmulde 15 verfügt. Dadurch, dass die Lage und insbesondere der lotrechte Abstand der 3D-Kamera zum Bodenuntergrund bekannt ist (insbesondere mithilfe des Abstandssensors 16, wie vorstehen erläutert) kann die Steuereinheit jedem Bildpunkt P einen individuellen lotrechten Abstand zum Bodenuntergrund zuordnen. Dies ermöglicht es, die vorhandenen Bildpunkte zu gruppieren und bestimmte Bildpunkte für die weitere Verarbeitung zu vernachlässigen. Beispielsweise kann die Steuereinheit 6 eine virtuelle Referenzebene R1 einziehen. Diese Referenzebene R1 verläuft parallel zum Bodenuntergrund, üblicherweise somit horizontal. Die Referenzebene R1 verläuft etwas unterhalb der Bodenfläche der Transportmulde 15. All diejenigen Bildpunkte, die unterhalb der Referenzebene R1 liegen, werden somit nicht weiter berücksichtigt, wohingegen all diejenigen Bildpunkte, die konkret auf Höhe der Transportmulde 15 liegen, zur Detektion der Transportmulde genutzt werden. Alternativ kann die virtuelle Referenzebene auch deutlich oberhalb des Transportmuldenbodens angesetzt werden, wie in Fig. 5 beispielsweise durch die Referenzebene R2 angegeben. Einerseits werden von der Transportmulde dann selektiv nur die in Vertikalrichtung oberen (oberhalb der R2) liegenden Bereiche berücksichtigt. Andererseits kann dies auch zur Ermittlung und Überwachung des Füllstandes der Transportmulde 15 genutzt werden, wie in Fig. 5 beispielhaft durch die gepunktete Füllstandslinie und die beiden Bildpunkte P' angegeben.

Figur 6 gibt nun eine Draufsicht von oben in den Innenraum einer Transportmulde bzw. der Projektion der gewonnenen Bildpunkte in eine zweidimensionale Referenzebene, vorliegend eine horizontal verlaufende Referenzebene (Referenzebene R1 aus Fig. 5), wieder. In vertikaler Richtung unterhalb der Innenoberfläche der Transportmulde liegende Bildpunkte sind dabei virtuell ausgeblendet worden. Figur 6 verdeutlicht zunächst, dass die Innenwände der Transportmulde 15 zu einer erhöhten Dichte von Bildpunkten führen, da in diesen Bereichen, wie zu Figur 5 bereits erläutert, übereinander liegende Bildpunkte auftreten können. In der von den Seitenwänden umrahmten Innenfläche der Transportmulde 15 ist die Verteilung der Bildpunkte dagegen vergleichsweise gleichmäßig (bei leerer Transportmulde 15).

Die vorstehend erwähnte Steuereinheit 6 ist nun erfindungsgemäß derart ausgebildet, dass sie einerseits in Bezug auf eine virtuelle Referenzebene R darunter (und/oder über eine andere Referenzebene) liegende Bildpunkte aus der an Aufnahmen der 3D-Kamera 16 ausblenden kann. Andererseits projiziert sie die dann verbliebenen Bildpunkte bevorzugt zur weiteren Verarbeitung in eine 2-dimensionale Referenzebene, wie in Figur 6 veranschaulicht. Durch eine Analyse der Verteilung der nunmehr verbleibenden, vergleichsweise wenigen Bildpunkte können die Verläufe der Seitenwände oder zumindest eines Teils der Seitenwände der Transportmulde von der Steuereinheit 6 ermittelt werden, wie beispielsweise im Bereich B1 veranschaulicht, wobei der Berechnungsaufwand durch die Reduktion der relevanten Bildpunkte erheblich verringert worden ist. Dort liegt eine erhöhte Häufung an Bildpunkten entlang einer Geraden in der Referenzebene vor. Dies markiert den Verlauf einer Seitenwand der Transportmulde 15. Der Bildausschnitt B2 veranschaulicht hierzu im Vergleich eine niedrigere Bildpunktverteilung im Bereich der Innenfläche der Transportmulde 15. Über den Verlauf der Seitenwand an sich hinaus kann somit auch die Orientierung der Transportmulde 15 bzw. die Lage ihres Innenraums ermittelt werden, nämlich durch die verhältnismäßig gleichmäßige und/oder zumindest hinsichtlich der Bildpunktdichte geringeren Bildpunktverteilung. Der Bildausschnitt B3 veranschaulicht, wie die Lage einer Ecke der Transportmulde ermittelbar ist. Einerseits treffen im Bildausschnitt B3 zwei Bereiche nahezu rechtwinklig aufeinander, in denen geradlinige Anteile mit erhöhter Bildpunkdichte vorliegen. Andererseits wird deutlich, dass diese geradlinigen Anteile einen Bereich mit verminderter Bildpunktdichte einschließen, wodurch die Steuereinheit ebenfalls die Lage und Orientierung der Transportmulde in diesem Bereich bestimmen kann.

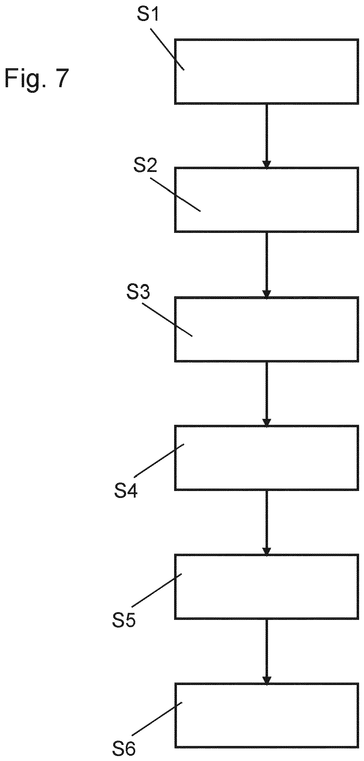

Figur 7 veranschaulicht nun den Ablauf des erfindungsgemäßen Verfahrens, insbesondere unter Nutzung einer oder mehrerer der in den vorliegenden figurenveranschaulichten Ausführungsbeispiel. Im Schritt S1 erfolgt zunächst ein Ermitteln des Abstandes der am Verladeförderband 10 angeordneten 3D-Kamera 16 lotrecht zur Bodenoberfläche. Dies kann beispielsweise durch unmittelbare lotrechte Ermittlung des Abstandes mithilfe des vorstehend beschriebenen Abstandsensors 17 erfolgen oder, insbesondere bei einer Schrägstellung des Abstandssensors 17, durch ergänzende Berücksichtigung der Neigung des Verladeförderbandes 10 gegenüber dem Bodenuntergrund. Damit kann die Lage der 3D-Kamera 16 bzw. des von ihr aufgenommenen Bildes insbesondere ins Verhältnis zum Bodenuntergrund gesetzt werden.

Im Schritt S2 erfolgt nun unter Ausnutzung der 3D-Kamera 16 das Aufnehmen einer Vielzahl von Bildpunkten, in ihrer Gesamtheit insbesondere das Erzeugen einer 3D-Punktwolke, der in dem Blickfeld der 3D-Kamera 16 liegenden Transportmulde 15 oder wenigstens eines Teils davon. Auf diese Weise wird ein virtuelles Abbild der innerhalb des Aufnahmebereichs der 3D-Punktwolke liegenden Transportmulde 15 oder zumindest des jeweiligen Bereiches derselben erzeugt.

Es erfolgt nun in einem optionalen Zwischenschritt ein Verarbeiten der insgesamt verfügbaren Vielzahl von Bildpunkten derart, dass diese im Schritt S3 in eine virtuelle 2-D-Referenzebene projiziert werden, wobei die 2-D-Referenzebene sinnvollerweise parallel zum Verlauf des Bodenuntergrundes, konkret bei horizontal stehender Maschine 1 in eine horizontale 2-D-Referenzebene, verläuft. In lotrechter bzw. vertikaler Richtung übereinander liegende Bildpunkte führen dementsprechend in dieser zweidimensionalen Projektion zu einer deutlich erhöhten Bildpunktdichte im Vergleich zu nebeneinander liegenden Bildpunkten. Entsprechend führen die Innenoberflächen der Seitenwände der Transportmulde bei einer Analyse der Häufigkeitsverteilung der Bildpunkte zu im Wesentlichen geradlinig verlaufenden Bereichen mit erhöhtem Bildpunktaufkommen. Die horizontale Fläche der Transportmulde 15 liefert dagegen Bereiche mit vergleichsweise geringer Bildpunktdichte. Das Ermitteln wenigstens einer Seitenwand der Transportmulde bzw. wenigstens eines Teilbereichs derselben aus der Punkteverteilung der Vielzahl der Bildpunkte in dieser zweidimensionalen Referenzebene erfolgt im Schritt S4. Unter Weglassung des Zwischenschrittes S3 kann auch aus der dreidimensionalen Punktwolke die Position der Transportmulde 15 durch beispielsweise Detektion geradliniger Bereiche erfolgen.

Im Schritt S5 ist nun vorgesehen, dass ein Korrelieren der ermittelten Lage der Transportmulde, insbesondere einer Seitenwand oder wenigstens eines Teilbereichs derselben in der Transportmulde 15 oder der gesamten Transportmulde 15 ,mit einer Lage des Abwurfpunktes 14 und/oder des Auftreffpunktes 14' und/oder einer Abwurfbahn 25 des vom Verladeförderband 10 abgeworfenen Schüttgutes erfolgt. Dazu kann es vorgesehen sein, dass der wahrscheinliche Abwurfpunkt 14 und/oder der wahrscheinliche Auftreffpunkt 14' virtuell herangezogen wird und/oder eine wahrscheinliche Abwurfbahn 25, insbesondere zuzüglich einer Sicherheitsabweichung in der Horizontalebene, mit berücksichtigt wird. Das Ergebnis dieses Korrelierens kann entweder ergeben, dass der Abwurfpunkt und/oder Auftreffpunkt und/oder die Abwurfbahn ganz oder teilweise außerhalb der vorstehend ermittelten Transportmulde liegen. Im Schritt S6 ist es dann vorgesehen, dass ein, insbesondere automatisches, Steuern einer Verladefunktion in Abhängigkeit vom Ergebnis der Korrelation der Lage der Seitenwand der Transportmulde mit einer Lage des Abwurfpunktes und/oder des Auftreffpunktes und/oder der Abwurfbahn des vom Verladeförderband abgeworfenen Schüttgutes erfolgt. Dies kann beispielsweise darin bestehen, dass die Neigung und/oder die Seitenauslenkung und/oder die Umlaufgeschwindigkeit des Förderbandes 10 derart verändert werden, dass der Abwurfpunkt und/oder der Auftreffpunkt und/oder die Abwurfbahn innerhalb der ermittelten Position der Transportmulde liegen. Es kann auch vorgesehen sein, dass der Verladevorgang abgebrochen oder gar nicht erst gestartet wird. Andererseits kann das Ergebnis der Korrelation auch darin liegen, dass der Abwurfpunkt und/oder der Auftreffpunkt und/oder die Abwurfbahn des vom Verladeförderband abgeworfenen Schüttgutes innerhalb der aktuell detektierten Transportmulde liegen. Dann sind keine Korrekturmaßnahmen gemäß Schritt S6 erforderlich.

Wie vorstehend bereits erwähnt, kann die konkrete Ermittlung des Abstandes der 3D-Kamera lotrecht zur Bodenoberfläche direkt oder auch indirekt erfolgen. Bei der indirekten Ermittlung können Messwerte weiterer Sensoren mit berücksichtigt werden. Dies können beispielsweise Sensoren sein, mit denen die Neigungsposition und/oder die Höhenverstellposition des Maschinenrahmens und/oder Stellpositionen von Seitenschilden etc. mit berücksichtigt werden. Wesentlich ist, dass diese Sensoren eine aktuelle Relativlage zweier zueinander verstellbarer Elemente der Maschine zum Verladeförderband und/oder der 3D-Kamera zum Verladeförderband 10 angeben. Dabei kann es insbesondere auch vorgesehen sein, dass die Steuereinheit 6 ausgehend von einer bekannten Ausgangslage dieser relativ zueinander verstellbaren Elemente unter Berücksichtigung der aktuellen Sensordaten den aktuellen lotrechten Abstand der 3D-Kamera rechnerisch anpasst.

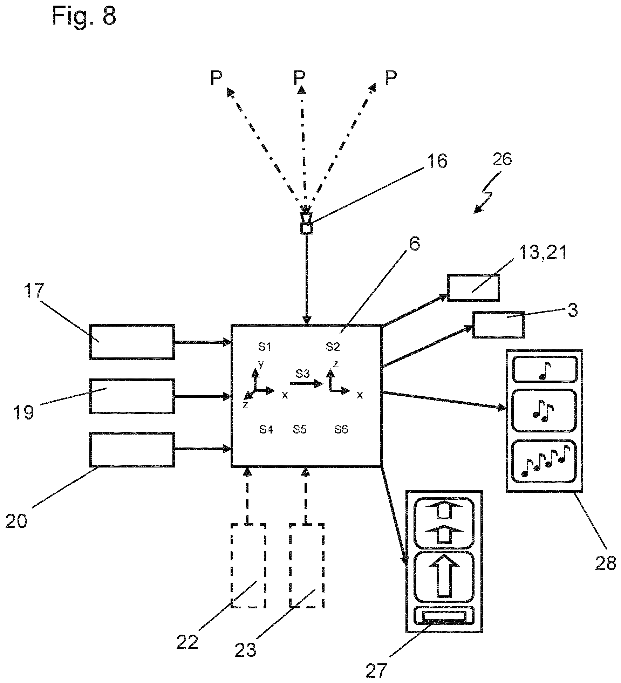

Fig. 8 zeigt nun exemplarisch den Aufbau eines erfindungsgemäßen Steuerungs- und Sensorsystems 26 zur Durchführung des erfindungsgemäßen Verfahrens. Dabei wird deutlich, dass die Steuereinheit 6 als zentrale Einheit sämtliche Daten der jeweils verwendeten Sensoren 17, 19, 20, 22 und/oder 23 und/oder auch weiterer Sensoren erhält, über die die Relativlage der Maschine 1 zum Bodenuntergrund, des Verladeförderbandes 10 zur Maschine 1 und/oder der 3D-Kamera zum Verladeförderband 10 ermittelt wird. Ferner übermittelt auch die 3D-Kamera 16 die von ihr aufgenommenen Bilddaten an die Steuereinheit 6. Diese führt rechnerisch die Schritte S1 bis S5 durch und gibt schließlich in Abhängigkeit vom Auswertungsergebnis Steuerbefehle an Aktoren 13 und/oder 21 und/oder weitere Aktoren, mit denen die Relativlage des Verladeförderbandes 10 gegenüber der Maschine 1 verändert und eingestellt wird (Seitenauslenkung, Neigung etc.). Ferner kann der Antriebsmotor 3, beispielsweise zum Stoppen der Maschine 1, wenn die 3D-Kamera keine Transportmulde 15 erfasst, von der Steuereinheit 6 angesteuert werden. Ergänzend oder alternativ ist es auch möglich, dass die Steuereinheit 6 die Ausgabe von Anzeigesignalen an eine akustische Signaleinheit 27 und/oder eine optische Signaleinheit 28, insbesondere innerhalb des Fahrstandes der Maschine 1 und/oder zum Transportfahrzeug 9 hin, steuert.

## Patentansprüche

1. Verfahren zur Steuerung des Betriebs eines an einer selbstfahrenden Straßenbau- oder Tagebaumaschine (1) angeordneten Verladeförderbandes (10) für Schüttgut relativ zu einer Transportmulde (15) eines Transportfahrzeugs (9), umfassend die Schritte:
a) Ermitteln (S1) des Abstandes (C) einer am Verladeförderband (10) angeordneten 3D-Kamera lotrecht zur Bodenoberfläche ;
b) Aufnehmen (S2) einer Vielzahl von Bildpunkten (P), insbesondere einer 3D-Punktwolke, der in einem Blickfeld der 3D-Kamera (16) liegenden Transportmulde (15) oder wenigstens eines Teiles davon durch die 3D-Kamera (16);
c) Ermitteln der Lage der Transportmulde (15) aus der Punkteverteilung der Vielzahl der Bildpunkte;
d) Korrelieren der ermittelten Lage der Transportmulde (15) mit einer Lage eines Abwurfpunktes (14) und/oder einer Abwurfbahn (25) und/oder eines Auftreffpunktes (14') des vom Verladeförderband (10) abgeworfenen Schüttgutes;
e) Steuern einer Verladefunktion in Abhängigkeit vom Ergebnis der Korrelation der Lage der Transportmulde (15) mit einer Lage eines Abwurfpunktes und/oder einer Abwurfbahn des vom Verladeförderband (10) abgeworfenen Schüttgutes,
wobei
zwischen den Schritten b) und c) ein Projizieren der Vielzahl von Bildpunkten (P), insbesondere der 3D-Punktwolke, in eine im Wesentlichen horizontale 2D-Referenzebene (R) erfolgt, wobei die Festlegung der Position der 2D-Referenzebene (R) unter Berücksichtigung des im Schritt a) ermittelten Abstandes erfolgt, und
wobei im Schritt c) auf die Punkteverteilung der Vielzahl der Bildpunkte in der 2D-Referenzebene zurückgegriffen wird.

2. Verfahren gemäß Anspruch 1,
**dadurch gekennzeichnet,**
**dass** im Schritt a)
- das Ermitteln des Abstandes der 3D-Kamera (16) lotrecht zur Bodenoberfläche durch ein direktes Messen zum Boden hin erfolgt, insbesondere mithilfe eines Abstandssensors (17), und/oder;
- das Ermitteln des Abstandes der 3D-Kamera (16) lotrecht zur Bodenoberfläche durch ein indirektes Ermitteln über eine Positionsbestimmung wenigstens eines Verstellaktors, mit dem das Verladeförderband (10) relativ zu einem Maschinenrahmen (2) verstellbar ist, und/oder wenigstens eines Verstellaktors, mit dem der Maschinenrahmen (2) relativ zum Bodenuntergrund verstellbar ist, erfolgt.

3. Verfahren gemäß Anspruch 2,
**dadurch gekennzeichnet,**
**dass** im Schritt "Ermitteln des Abstandes der 3D-Kamera (16) lotrecht zur Bodenoberfläche durch ein indirektes Ermitteln" Wegmesswerte von Wegmesssensoren berücksichtigt werden, über die
- die Verstellposition von wenigstens einer und insbesondere aller Hubsäulen ermittelt wird, über die ein Maschinenrahmen (2) der Baumaschine höhenverstellbar gegenüber wenigstens einer Fahreinrichtung ist, und/oder
- die Verstellposition von Linearaktoren ermittelt wird, über die die 3D-Kamera (16) gegenüber einem Förderband und/oder das Förderband gegenüber einem Maschinenrahmen (2) um eine vertikale und/oder horizontale Schwenkachse verstellbar ist und/oder
- die Verstellposition von Linearaktoren ermittelt wird, über die die Höhenposition von wenigstens einem Seitenschild eines Fräswalzenkastens verstellbar ist.

4. Verfahren gemäß einem der vorhergehenden Ansprüche 2 oder 3,
**dadurch gekennzeichnet,**
**dass** im Schritt "Ermitteln des Abstandes der 3D-Kamera (16) lotrecht zur Bodenoberfläche durch ein indirektes Ermitteln" ein Ausgangswert mit bekanntem Abstand des optischen Sensors zum Boden und bekannten Verstellpositionen der Hubsäulen und/oder Linearaktoren berücksichtigt wird.

5. Verfahren gemäß einem der vorhergehenden Ansprüche,
**dadurch gekennzeichnet,**
**dass** im Schritt a) und/oder b)
- eine direkte Lagebestimmung der 3D-Kamera (16) zur Ermittlung von deren Blickwinkel erfolgt, insbesondere mithilfe wenigstens eines Beschleunigungssensors, und/oder
- eine indirekte Lagebestimmung 3D-Kamera (16) zur Ermittlung von deren Blickwinkel erfolgt durch eine Positionsbestimmung wenigstens eines Verstellaktors, mit dem das Verladeförderband (10) relativ zu einem Maschinenrahmen (2) verstellbar ist, und/oder wenigstens eines Verstellaktors, mit dem der Maschinenrahmen (2) relativ zum Bodenuntergrund verstellbar ist und/oder wenigstens eines Verstellaktors, mit dem die Position eines Seitenschildes eines Fräswalzenkasten einstellbar ist.

6. Verfahren gemäß einem der vorhergehenden Ansprüche,
**dadurch gekennzeichnet,**
**dass** zwischen den Schritten b) und c) ein Entfernen von Bodendatenpunkten aus der Vielzahl von Bildpunkten, insbesondere der 3D-Punktwolke, erfolgt, insbesondere durch Löschen oder Maskieren von Bodendatenpunkten und/oder durch Löschen von Bildpunkten unterhalb einer festgelegten virtuellen horizontalen Schwellenebene.

7. Verfahren gemäß einem der vorhergehenden Ansprüche,
**dadurch gekennzeichnet,**
**dass** im Schritt c)
- eine statistische Auswertung erfolgt und Bereiche mit einer erhöhten Häufung von Bildpunkten einer Seitenwand zugeordnet werden;
- geradlinig verlaufende Verteilungsmaxima einer Seitenwand zugeordnet werden;
- in einem bestimmten Winkelbereich, insbesondere 90° +/- 10° einander schneidende geradlinig verlaufende Verteilungsmaxima einer Ecke der Transportmulde (15) zugeordnet werden.

8. Verfahren gemäß einem der vorhergehenden Ansprüche,
**dadurch gekennzeichnet,**
**dass** im Schritt d) wenigstens einer der Faktoren Umlaufgeschwindigkeit des Verladeförderbandes (10), horizontale Schwenklage des Verladeförderbandes (10) und/oder vertikale Schwenklage des Verladeförderbandes (10) in eine Ermittlung und/oder Festlegung eines Abwurfpunktes und/oder einer Abwurfbahn erfolgt.

9. Verfahren gemäß einem der vorhergehenden Ansprüche,
**dadurch gekennzeichnet,**
**dass** im Schritt e) wenigstens eine der Verladefunktionen
- ein An- und/oder Abschalten eines Umlaufbetriebes eines Transportgurtes des Verladeförderbandes (10) ist und/oder
- ein Beschleunigen oder Bremsen der Umlaufgeschwindigkeit des Transportgurtes des Verladeförderbandes (10) und/oder
- ein Schwenken des Verladeförderbandes um eine vertikale und/oder um eine horizontale Schwenkachse und/oder
- ein Bremsen der Maschine (1) und/oder
- ein Betätigen einer Signaleinrichtung (27,28) ist.

10. Straßenbau- oder Tagebaumaschine (1), ausgebildet zur Durchführung des Verfahrens gemäß einem der vorhergehenden Ansprüche, insbesondere Beschicker oder Bodenfräsmaschine, ganz besonders Straßenfräse oder Surface-Miner, mit einem Verladeförderband (10), einer an einem Verladeförderband (10) angeordneten 3D-Kamera (16) und einer mit der 3D-Kamera (16) in Signalverbindung stehende Steuereinheit, wobei die Steuereinheit zur Durchführung der im Verfahren gemäß einem der vorhergehenden Ansprüche vorgesehenen Bildbearbeitungs- und - auswertungsschritte ausgebildet ist und in Abhängigkeit der von der 3D-Kamera (16) aufgenommenen Bilddaten wenigstens eine Verladefunktion des Verladeförderband (10) steuert.

11. Straßenbau- oder Tagebaumaschine gemäß Anspruch 10,
**dadurch gekennzeichnet,**
**dass** die 3D-Kamera (16) eine Stereokamera oder eine ToF-Kamera, insbesondere PMD-Kamera, ein Matrix-Lidar-Sensor oder eine plenoptische Kamera ist.

12. Straßenbau- oder Tagebaumaschine gemäß einem der Ansprüche 10 oder 11,
**dadurch gekennzeichnet,**
**dass** sie wenigstens eine Wegmesseinrichtung aufweist, insbesondere
- derart, dass sie die Höhenposition eines höhenverstellbaren Maschinenrahmens (2) gegenüber wenigstens einer Fahreinrichtung ermittelt, und/oder
- derart, dass sie die Höhenposition eines Seitenschildes eines Fräswalzenkastens gegenüber einem höhenverstellbaren Maschinenrahmen (2) ermittelt, und/oder
- derart, dass sie die Verstellposition eines Linearaktors ermittelt, der eine Verschwenkung eines am Maschinenrahmen (2) schwenkbar gelagerten Förderbandes um eine horizontale Schwenkachse antreibt, und/oder
- derart, dass sie die Verstellposition eines Linearaktors ermittelt, der eine Verschwenkung eines am Maschinenrahmen (2) schwenkbar gelagerten Förderbandes um eine vertikale Schwenkachse antreibt.

13. Straßenbau- oder Tagebaumaschine gemäß einem der Ansprüche 10 bis 12,
**dadurch gekennzeichnet,**
**dass** sie wenigstens einen Winkelsensor aufweist, der derart angeordnet ist, dass
- er den vertikalen und/oder horizontalen Schwenkwinkel eines schwenkbar an einem Maschinenrahmen (2) der Baumaschine gelagerten Förderbandes ermittelt;
- er den Schwenkwinkel des optischen Sensors, insbesondere einer Kamera, relativ zu einem Förderband und/oder einem Maschinenrahmen (2) ermittelt.

14. Straßenbau- oder Tagebaumaschine gemäß einem der Ansprüche 10 bis 13,
**dadurch gekennzeichnet,**
**dass** sie wenigstens einen Lagesensor, insbesondere Beschleunigungssensor, aufweist, mit dem die Ausrichtung der 3D-Kamera (16) relativ zum Bodenuntergrund ermittelbar ist, wobei ein Lagesensor an einem Förderband und/oder unmittelbar an der 3D-Kamera (16) angeordnet ist und/oder ein Lagesensor an wenigstens einer der Fahreinrichtungen angeordnet ist.

15. Straßenbau- oder Tagebaumaschine gemäß einem der Ansprüche 10 bis 14,
**dadurch gekennzeichnet,**
**dass** die Steuereinheit in Signalverbindung mit wenigstens einem Winkelsensor und/oder einem Lagesensor und/oder wenigstens einer Wegmesseinrichtung aufweist.

## Claims

1. A method for controlling the operation of a loading conveyor belt (10) for bulk material arranged on a self-propelled road construction machine or open-cast mining machine (1) relative to a transport trough (15) of a transport vehicle (9), comprising the steps of:
a) determining (S1) the distance (C) of a 3D camera arranged on the loading conveyor belt (10) perpendicular to the ground surface;
b) capturing (S2) a plurality of image points (P), in particular a 3D point cloud, of the transport trough (15) lying in a field of view of the 3D camera (16) or at least a part thereof by the 3D camera (16);
c) determining the orientation of the transport trough (15) from the point distribution of the plurality of image points;
d) correlating the determined orientation of the transport trough (15) with an orientation of a discharge point (14) and/or a discharge path (25) and/or an impact point (14') of the bulk material discharged from the loading conveyor belt (10);
e) controlling a loading function as a function of the result of the correlation of the orientation of the transport trough (15) with an orientation of a discharge point and/or a discharge path of the bulk material discharged from the loading conveyor belt (10),
wherein
between steps b) and c) the plurality of image points (P), in particular the 3D point cloud, is projected into an essentially horizontal 2D reference plane (R), the position of the 2D reference plane (R) being determined taking into account the distance determined in step a), and
wherein in step c) use is made of the point distribution of the plurality of image points in the 2D reference plane.

2. The method according to claim 1,
**characterized in that**
in step a)
- the distance of the 3D camera (16) perpendicular to the ground surface is determined by direct measurement toward the ground, in particular using a distance sensor (17); and/or
- the distance of the 3D camera (16) perpendicular to the ground surface is determined through an indirect determination via a position determination of at least one adjustment actuator via which the loading conveyor belt (10) is adjustable relative to a machine frame (2), and/or at least one adjustment actuator via which the machine frame (2) is adjustable relative to the underlying ground.

3. The method according to claim 2,
**characterized in that**
in the step of "determining the distance of the 3D camera (16) perpendicular to the ground surface through an indirect determination" displacement measurement values of displacement measuring sensors are taken into account via which
- the adjustment position of at least one and in particular all lifting columns is determined via which a machine frame (2) of the construction machine is height-adjustable relative to at least one travel unit, and/or
- the adjustment position of linear actuators is determined via which the 3D camera (16) is adjustable relative to a conveyor belt and/or the conveyor belt is adjustable relative to a machine frame (2) about a vertical and/or horizontal swivel axis, and/or
- the adjustment position of linear actuators is determined via which the height position of at least one side plate of a milling drum box is adjustable.

4. The method according to any one of the preceding claims 2 or 3
**characterized in that**
in the step of "determining the distance of the 3D camera (16) perpendicular to the ground surface through an indirect determination" an initial value with known distance of the optical sensor to the ground and known adjustment positions of the lifting columns and/or linear actuators is taken into account.

5. The method according to any one of the preceding claims,
**characterized in that**
in step a) and/or b)
- a direct orientation determination of the 3D camera (16) for determining its viewing angle is performed, in particular using at least one acceleration sensor, and/or
- an indirect orientation determination of the 3D camera (16) for determining its viewing angle is performed through a position determination of at least one adjustment actuator via which the loading conveyor belt (10) is adjustable relative to a machine frame (2), and/or at least one adjustment actuator via which the machine frame (2) is adjustable relative to the underlying ground, and/or at least one adjustment actuator via which the position of a side plate of a milling drum box is adjustable.

6. The method according to any one of the preceding claims
**characterized in that**
between steps b) and c) ground data points are removed from the plurality of image points, in particular the 3D point cloud, in particular by deleting or masking ground data points and/or by deleting image points below a defined virtual horizontal threshold plane.

7. The method according to any one of the preceding claims
**characterized in that**
in step c)
- a statistical evaluation is performed and regions with an increased accumulation of image points are associated with a side wall;
- distribution maxima running in a straight line are associated with a side wall;
- distribution maxima running in a straight line and intersecting one another in a specific angular range, in particular 90° +/- 10°, are associated with a corner of the transport trough (15).

8. The method according to any one of the preceding claims,
**characterized in that**
in step d) at least one of the factors circulating speed of the loading conveyor belt (10), horizontal swivel position of the loading conveyor belt (10) and/or vertical swivel position of the loading conveyor belt (10) is included in a determination and/or definition of a discharge point and/or a discharge path.

9. The method according to any one of the preceding claims,
**characterized in that**
in step e) at least one of the loading functions is
- switching on and/or off a circulating operation of a transport belt of the loading conveyor belt (10) and/or
- accelerating or decelerating the circulating speed of the transport belt of the loading conveyor belt (10) and/or
- swiveling the loading conveyor belt about a vertical and/or about a horizontal swivel axis and/or
- braking the machine (1) and/or
- actuating a signaling device (27, 28).

10. A road construction or open-cast mining machine (1), configured to carry out the method according to any one of the preceding claims, in particular a feeder or ground milling machine, very particularly a road milling machine or surface miner, having a loading conveyor belt (10), a 3D camera (16) arranged on a loading conveyor belt (10) and a control unit in signal connection with the 3D camera (16), wherein the control unit is configured to carry out the image processing and evaluation steps provided in the method according to any one of the preceding claims and controls at least one loading function of the loading conveyor belt (10) as a function of the image data captured by the 3D camera (16).

11. The road construction or open-cast mining machine according to claim 10,
**characterized in that**
the 3D camera (16) is a stereo camera or a ToF camera, in particular a PMD camera, a matrix lidar sensor or a plenoptic camera.

12. The road construction or open-cast mining machine according to any one of claims 10 or 11,
**characterized in that**
it includes at least one displacement measuring device, in particular
- such that it determines the height position of a height-adjustable machine frame (2) relative to at least one travel unit, and/or
- such that it determines the height position of a side plate of a milling drum box relative to a height-adjustable machine frame (2), and/or
- such that it determines the adjustment position of a linear actuator which drives a swiveling of a conveyor belt swivel-mounted on the machine frame (2) about a horizontal swivel axis, and/or
- such that it determines the adjustment position of a linear actuator which drives a swiveling of a conveyor belt swivel-mounted on the machine frame (2) about a vertical swivel axis.

13. The road construction or open-cast mining machine according to any one of claims 10 to 12,
**characterized in that**
it includes at least one angle sensor arranged such that
- it determines the vertical and/or horizontal swivel angle of a conveyor belt swivel-mounted on a machine frame (2) of the construction machine;
- it determines the swivel angle of the optical sensor, in particular a camera, relative to a conveyor belt and/or a machine frame (2).

14. The road construction or open-cast mining machine according to any one of claims 10 to 13,
**characterized in that**
it includes at least one orientation sensor, in particular acceleration sensor, via which the orientation of the 3D camera (16) relative to the underlying ground can be determined, wherein an orientation sensor is arranged on a conveyor belt and/or directly on the 3D camera (16) and/or an orientation sensor is arranged on at least one of the travel units.

15. The road construction or open-cast mining machine according to any one of claims 10 to 14,
**characterized in that**
the control unit is in signal connection with at least one angle sensor and/or an orientation sensor and/or at least one displacement measuring device.

## Revendications

1. Procédé de commande du fonctionnement d'un convoyeur de chargement (10) pour matériau en vrac installé sur un engin automoteur pour la construction de routes ou d'un engin (1) d'exploitation minière à ciel ouvert, par rapport à une benne de transport (15) d'un véhicule de transport (9), comprenant les étapes de :
a) détermination (S1) de la distance (C) d'une caméra 3D installée sur le convoyeur (10) de chargement perpendiculairement à la surface du sol ;
b) capture (S2) d'une pluralité de pixels (P), en particulier un nuage de points 3D, de la benne de transport (15) se trouvant dans le champ de vision de la caméra 3D (16) ou au moins une partie de ceux-ci par la caméra 3D (16) ;
c) détermination de l'orientation de la benne de transport (15) à partir de la distribution des points de la pluralité de pixels ;
d) corrélation de l'orientation déterminée de la benne de transport (15) avec une orientation d'un point de déchargement (14) et/ou d'un trajet de déchargement (25) et/ou d'un point d'impact (14') du matériau en vrac déchargé du convoyeur de chargement (10) ;
e) commande d'une fonction chargement en fonction du résultat de la corrélation de l'orientation de la benne de transport (15) avec une orientation d'un point de déchargement et/ou d'un trajet de déchargement du matériau en vrac déchargé du convoyeur de chargement (10),
dans lequel
entre les étapes b) et c), la pluralité de pixels (P), en particulier du nuage de points 3D, est projetée dans un plan de référence 2D sensiblement horizontal (R), la position du plan de référence 2D (R) étant déterminée en prenant en compte la distance déterminée à l'étape a), et
dans lequel, à l'étape c), il est fait utilisation de la distribution des points de la pluralité de pixels dans le plan de référence 2D.

2. Procédé selon la revendication 1,
***caractérisé en ce que***
à l'étape a)
- la distance de la caméra 3D (16) perpendiculairement à la surface au sol est déterminée par mesure directe en direction du sol, en particulier en utilisant un capteur de distance (17) ; et/ou
- la distance de la caméra 3D (16) perpendiculairement à la surface du sol est déterminée par l'intermédiaire d'une détermination indirecte via une détermination de la position d'au moins un actionneur de réglage via lequel le convoyeur de chargement (10) est réglable par rapport à un châssis (2) de machine, et/ou au moins un actionneur de réglage via lequel le châssis (2) de machine est réglable par rapport au sol sous-jacent.

3. Procédé selon la revendication 2,
***caractérisé en ce que***
à l'étape de « détermination de la distance de la caméra 3D (16) perpendiculairement à la surface du sol par l'intermédiaire d'une détermination indirecte », des valeurs de mesure du déplacement provenant de capteurs de mesure du déplacement sont prises en compte via lesquelles
- la position de réglage d'au moins l'une, et en particulier de toutes, les colonnes de levage est déterminée, via laquelle un châssis (2) de machine de l'engin de chantier est réglable en hauteur par rapport à au moins une unité de déplacement, et/ou
- la position de réglage des actionneurs linéaires est déterminée via laquelle la caméra 3D (16) est réglable par rapport à un convoyeur et/ou le convoyeur est réglable par rapport à un châssis (2) de machine autour d'un axe de pivotement vertical et/ou horizontal, et/ou
- la position de réglage des actionneurs linéaires est déterminée via laquelle la position en hauteur d'au moins une plaque latérale d'un caisson de tambour de fraisage est réglable.

4. Procédé selon l'une quelconque des revendications 2 ou 3 précédentes,
***caractérisé en ce que***
à l'étape de «détermination de la distance de la caméra 3D (16) perpendiculairement à la surface du sol par l'intermédiaire d'une détermination indirecte », une valeur initiale avec une distance connue du capteur optique jusqu'au sol et des positions de réglage connues des colonnes de levage et/ou des actionneurs linéaires est prise en compte.

5. Procédé selon l'une quelconque des revendications précédentes,
***caractérisé en ce que***
à l'étape a) et/ou b)
- une détermination d'orientation directe de la caméra 3D (16) pour déterminer son angle de vision est réalisée, en particulier en utilisant au moins un capteur d'accélération, et/ou
- une détermination d'orientation indirecte de la caméra 3D (16) pour déterminer son angle de vision est réalisée par l'intermédiaire d'une détermination de la position d'au moins un actionneur de réglage via lequel le convoyeur de chargement (10) est réglable par rapport à un châssis (2) de machine, et/ou d'au moins un actionneur de réglage via lequel le châssis (2) de machine est réglable par rapport au sol sous-jacent, et/ou d'au moins un actionneur de réglage via lequel la position d'une plaque latérale d'un caisson de tambour de fraisage est réglable.

6. Procédé selon l'une quelconque des revendications précédentes,
***caractérisé en ce que***
entre les étapes b) et c) des points des données du sol sont éliminés de la pluralité de pixels, en particulier du nuage de points 3D, en particulier en éliminant ou en masquant des points des données du sol et/ou en éliminant les pixels au-dessous d'un plan de seuil horizontal virtuel défini.

7. Procédé selon l'une quelconque des revendications précédentes,
***caractérisé en ce que***
à l'étape c)
- une évaluation statistique est réalisée et des zones avec une accumulation augmentée de pixels sont associées à une paroi latérale ;
- des maximas de distribution courant selon une ligne droite sont associés à une paroi latérale ;
- des maximas de distribution courant selon une ligne droite et s'intersectant entre eux selon une plage angulaire spécifique, en particulier 90° +/- 10°, sont associés à un coin de la benne de transport (15).

8. Procédé selon l'une quelconque des revendications précédentes,
***caractérisé en ce que***
à l'étape d), au moins l'un des facteurs vitesse de circulation du convoyeur de transport (10), position de pivotement horizontale du convoyeur de transport (10), et/ou position de pivotement verticale du convoyeur de transport (10) est inclus dans une détermination et/ou définition d'un point de décharge et/ou d'un trajet de décharge.

9. Procédé selon l'une quelconque des revendications précédentes,
***caractérisé en ce que***
à l'étape e) au moins l'une des fonctions chargement est :
- activation et/ou coupure d'une opération de circulation d'une courroie de transport du convoyeur de transport (10) et/ou
- accélération ou décélération de la vitesse de circulation de la courroie de transport du convoyeur de transport (10) et/ou
- pivotement du convoyeur de transport (10) autour de l'axe de pivotement vertical et/ou autour d'un axe de pivotement horizontal, et/ou
- freinage de la machine (1) et/ou
- actionnement d'un dispositif de signalisation (27, 28).

10. Engin (1) pour la construction de routes ou pour l'exploitation minière à ciel ouvert, configuré pour mettre en oeuvre le procédé selon l'une quelconque des revendications précédentes, en particulier un alimenteur ou un engin de fraisage du sol, tout particulièrement une fraiseuse routière ou un « surface miner » (extracteur de surface), ayant un convoyeur de transport (10), une caméra 3D (16) installée sur un convoyeur de transport (10) et une unité de commande en communication de signaux avec la caméra 3D (16), dans lequel l'unité de commande est configurée pour effectuer les étapes de traitement et d'évaluation des images offertes par le procédé selon l'une quelconque des revendications précédentes, et commander au moins une fonction chargement du convoyeur de chargement (10) en fonction des données d'images capturées par la caméra 3D (16).

11. Engin pour la construction de routes ou pour l'exploitation minière à ciel ouvert selon la revendication 10,
***caractérisé en ce que***
la caméra 3D (16) est une caméra stéréo ou une caméra ToF (caméra temps de vol), en particulier une caméra PMD, un capteur lidar à matrice ou une caméra plénoptique.

12. Engin pour la construction de routes ou pour l'exploitation minière à ciel ouvert selon l'une quelconque des revendications 10 ou 11,
***caractérisé en ce que***
il comprend au moins un dispositif de mesure d'un déplacement, en particulier
- tel qu'il détermine la position en hauteur d'un châssis (2) de machine réglable en hauteur par rapport à au moins une unité de déplacement, et/ou
- tel qu'il détermine la position en hauteur d'une plaque latérale de caisson de tambour de fraisage par rapport à au moins un châssis (2) réglable en hauteur, et/ou
- tel qu'il détermine la position de réglage d'un actionneur linéaire qui entraîne un pivotement d'une courroie de transport montée pivotante sur le châssis (2) de machine autour d'un axe de pivotement horizontal, et/ou
- tel qu'il détermine la position de réglage d'un actionneur linéaire qui entraîne un pivotement d'une courroie de transport montée pivotante sur le châssis (2) de machine autour d'un axe de pivotement vertical.

13. Engin pour la construction de routes ou pour l'exploitation minière à ciel ouvert selon l'une quelconque des revendications 10 à 12,
***caractérisé en ce que***
il comprend au moins un capteur d'angle agencé de telle sorte que :
- il détermine l'angle de pivotement vertical et/ou horizontal d'une courroie de transport montée pivotante sur un châssis (2) de machine de l'engin de construction ;
- il détermine l'angle de pivotement du capteur optique, en particulier une caméra, par rapport à une courroie de transport et/ou un châssis (2) de machine.

14. Engin pour la construction de routes ou pour l'exploitation minière à ciel ouvert selon l'une quelconque des revendications 10 à 13,
***caractérisé en ce que***
il comprend au moins un capteur d'orientation, en particulier un capteur d'accélération, par l'intermédiaire duquel l'orientation de la caméra 3D (16) par rapport au sol sous-jacent peut être déterminée, un capteur d'orientation étant installé sur une courroie de transport et/ou directement sur la caméra 3D (16) et/ou un capteur d'orientation étant installé sur au moins l'une des unités de déplacement.

15. Engin pour la construction de routes ou pour l'exploitation minière à ciel ouvert selon l'une quelconque des revendications 10 à 14,
***caractérisé en ce que***
l'unité de commande est en communication de signaux avec au moins un capteur d'angle et/ou un capteur d'orientation et/ou un dispositif de mesure du déplacement.
